# EUROPEAN PATENT APPLICATION

(11) **EP 4 309 964 A2**
(43) Date of publication of application: **24.01.2024**
(21) Application number: 23206557.3
(22) Date of filing: 24.07.2018
(51) Int. Cl.: B60S 1/48

(54) **VEHICLE CLEANER SYSTEM AND VEHICLE CLEANER CONTROL DEVICE**

(30) Priority: 24.07.2017 JP 2017142714; 24.07.2017 JP 2017142715; 24.07.2017 JP 2017142716; 24.07.2017 JP 2017142717
(62) Divisional of application: 18838511.6
(71) Applicant: Koito Manufacturing Co., Ltd., Shinagawa-ku, Tokyo (JP)
(72) Inventor: KAMIYA, Misako, Shizuoka (JP); OKAMURA, Shunsuke, Shizuoka (JP); KASABA, Yusuke, Shizuoka (JP); KONDO, Masayuki, Shizuoka (JP); FUSHIMI, Yoshiaki, Shizuoka (JP)
(74) Representative: Cabinet Beau de Loménie

(57) **Abstract**

Provided is a vehicle cleaner system (100) including: a sensor which is mounted on a vehicle, is configured to acquire information around the vehicle, and is configured to output a sensor signal; a cleaner capable of discharging a cleaning liquid to the sensors; a vehicle control unit configured to recognize information around a host vehicle or control the host vehicle by using the sensor signal output from the sensor; and a cleaner control unit configured to output to at least one of the sensor and the vehicle control unit an in-operation signal indicating that the cleaner is in operation when the cleaner is in operation.

## Description

### TECHNICAL FIELD

The present invention relates to a vehicle cleaner system and a vehicle cleaner control device.

### BACKGROUND ART

A vehicle headlamp cleaner is known from Patent Literature 1 and the like.

In recent years, a camera has been mounted on a vehicle. The camera outputs acquired information to a vehicle ECU or the like that controls a host vehicle. A vehicle cleaner capable of cleaning such a camera or sensor with a cleaning liquid is known from Patent Literature 1 and Patent Literature 2.

### CITATION LIST

### PATENT LITERATURE

Patent Literature 1: JP-A-2016-187990
Patent Literature 2: JP-A-2001-171491

### SUMMARY OF INVENTION

### TECHNICAL PROBLEM

In recent years, attempts have been made to develop a vehicle that can be driven automatically. At the time of realizing the automatic driving, it is required to maintain good sensitivity of sensors such as LiDAR and a camera. In addition to cleaning the headlamp, a cleaner that cleans the sensors has been required.

Incidentally, a plurality of sensors are mounted on the vehicle. When the plurality of sensors are cleaned at the same time, the present inventors have found that it becomes difficult to control the vehicle based on information output from the sensors.

Therefore, an object of the present invention is to provide a vehicle cleaner system capable of controlling a vehicle based on information with high reliability usually while keeping a plurality of sensors in a clean state.

In addition, since a cleaning liquid is discharged to a lens or an outer cover of the camera during cleaning, information temporarily acquired by the camera becomes unclear. The unclear information has low reliability.

Therefore, the present invention provides a vehicle cleaner system capable of reducing a vehicle control unit from executing processing based on a sensor signal during sensor cleaning with low reliability.

In addition, when the cleaner automatically operates, an operation burden on a user is reduced, and usability is good for the user. On the other hand, in a case where the cleaner operates regardless of an intention of the user, the cleaner may operate even in a case where the cleaner is not desired to operate. For example, since a cleaning liquid is discharged to a lens or an outer cover of the camera during cleaning, information acquired by the camera temporarily becomes unclear.

Therefore, the present invention provides a vehicle cleaner control device capable of keeping a sensor in a clean state when necessary while reducing an operation burden on a user.

In the case where the vehicle cleaner is configured to operate depending on predetermined conditions regardless of the intention of the user, an inconvenient situation may occur. For example, even in a case where there is a person around the host vehicle, if the predetermined conditions are satisfied, the vehicle cleaner discharges the cleaning liquid. Then, there is a concern that the cleaning liquid may spatter on the person around the host vehicle. In order to prevent such a situation, a configuration with a switch by which the user can turn off power of the vehicle cleaner is also considered, but the usability for the user is impaired.

Therefore, the present invention provides a cleaner control device that realizes a vehicle cleaner with good usability for a user.

### SOLUTION TO PROBLEM

A vehicle cleaner system according to an aspect of the present invention includes:
a plurality of cleaners capable of respectively cleaning a plurality of sensors in which at least one of a detection method, an object to be detected, a detection direction, and a detection timing is different from each other; and
a cleaner control unit configured to operate the plurality of cleaners depending on a signal to be input, in which
the cleaner control unit is configured to control all of the cleaners so as not to be operated at the same time.

Moreover, a vehicle cleaner system related to one aspect of the present invention, including:
a sensor which is mounted on a vehicle, is configured to acquire information around the vehicle, and is configured to output a sensor signal;
a cleaner capable of discharging a cleaning liquid to the sensors;
a vehicle control unit configured to recognize information around a host vehicle or control the host vehicle by using the sensor signal output from the sensor; and
a cleaner control unit configured to output to at least one of the sensor and the vehicle control unit an in-operation signal indicating that the cleaner is in operation when the cleaner is in operation.

Moreover, a vehicle cleaner control device related to one aspect of the present invention and configured to control a sensor cleaner configured to clean a sensor mounted on a vehicle and acquiring information outside the vehicle, in which
the sensor cleaner control device is configured to output a signal for operating the sensor cleaner to the sensor cleaner based on traveling information of the vehicle.

The traveling information is at least one of an output signal from a winker switch, navigation information, automatic driving information, and a steering control signal.

Moreover, a cleaner control device related to one aspect of the present invention and configured to control a cleaner so as to discharge a cleaning liquid to a cleaning object mounted on a vehicle depending on predetermined conditions, including:
a prohibition determining unit configured to prohibit operation of the cleaner even when the predetermined conditions are satisfied, in which
the prohibition determining unit is configured to prohibit the operation of the cleaner,
   when a signal indicating that there is a person around a host vehicle is input from a human sensor capable of detecting presence or absence of the person around the vehicle,
   when a vehicle speed equal to or lower than a threshold value is detected by a vehicle speed sensor, or
   when it is determined that the host vehicle is in an area where it is highly possible that there is a person by a location information acquisition unit configured to acquire a geographical position of the host vehicle.

### ADVANTAGEOUS EFFECTS OF INVENTION

According to an aspect of the present invention, there is provided a vehicle cleaner system capable of controlling a vehicle based on information with high reliability usually while keeping a plurality of sensors in a clean state.

According to an aspect of the present invention, there is provided a vehicle cleaner system capable of reducing a vehicle control unit from executing processing based on a sensor signal during sensor cleaning with low reliability.

According to an aspect of the present invention, there is provided a vehicle cleaner control device capable of keeping a sensor in a clean state when necessary while reducing an operation burden on a user.

According to an aspect of the present invention, there is provided a cleaner control device that realizes a vehicle cleaner with good usability for a user.

### BRIEF DESCRIPTION OF DRAWINGS

[Fig. 1] Fig. 1 is a top view of a vehicle on which a cleaner system is mounted.
[Fig. 2] Fig. 2 is a block diagram of a vehicle system.
[Fig. 3] Fig. 3 is a block diagram of a cleaner system.
[Fig. 4] Fig. 4 is a block diagram of a cleaner system according to a first embodiment.
[Fig. 5] Fig. 5 is a flow chart of processing executed by a cleaner control unit.
[Fig. 6] Fig. 6 is a schematic view of a cleaner system according to a second embodiment.
[Fig. 7] Fig. 7 shows image information delivered by a front camera and a vehicle control unit in the cleaner system according to the second embodiment.
[Fig. 8] Fig. 8 is a schematic view of a cleaner system according to a first modification.
[Fig. 9] Fig. 9 shows image information delivered by a front camera and a vehicle control unit in the cleaner system according to the first modification.
[Fig. 10] Fig. 10 is a schematic view of a cleaner system according to a second modification.
[Fig. 11] Fig. 11 shows image information delivered by a front camera and a vehicle control unit in the cleaner system according to the second modification.
[Fig. 12] Fig. 12 is a schematic view of a cleaner system according to a third modification.
[Fig. 13] Fig. 13 shows image information delivered by a front camera and a vehicle control unit in the cleaner system according to the third modification.
[Fig. 14] Fig. 14 is a schematic view of a cleaner system according to a fourth modification.
[Fig. 15] Fig. 15 shows image information delivered by a front camera and a vehicle control unit in the cleaner system according to the fourth modification.
[Fig. 16] Fig. 16 is a schematic view of a cleaner system according to a fifth modification.
[Fig. 17] Fig. 17 shows image information delivered by a front camera and a vehicle control unit in the cleaner system according to the fifth modification.
[Fig. 18] Fig. 18 shows a state in which a vehicle turns left, and a cleaner system according to a third embodiment is mounted on the vehicle.
[Fig. 19] Fig. 19 shows a state in which a vehicle turns left, and a cleaner system according to a modification of the third embodiment is mounted on the vehicle.
[Fig. 20] Fig. 20 is a top view of a vehicle on which a cleaner system according to a fourth embodiment is mounted.
[Fig. 21] Fig. 21 is a block diagram of a cleaner system.
[Fig. 22] Fig. 22 is a block diagram of a cleaner system according to a modification.

### DESCRIPTION OF EMBODIMENTS

Hereinafter, embodiments of the present invention will be described with reference to the drawings. Incidentally, members having the same reference numbers as members that have been described in the description of the present embodiment will not be described for convenience of description. Dimensions of each member shown in the drawings may be different from actual dimensions of each member for convenience of description.

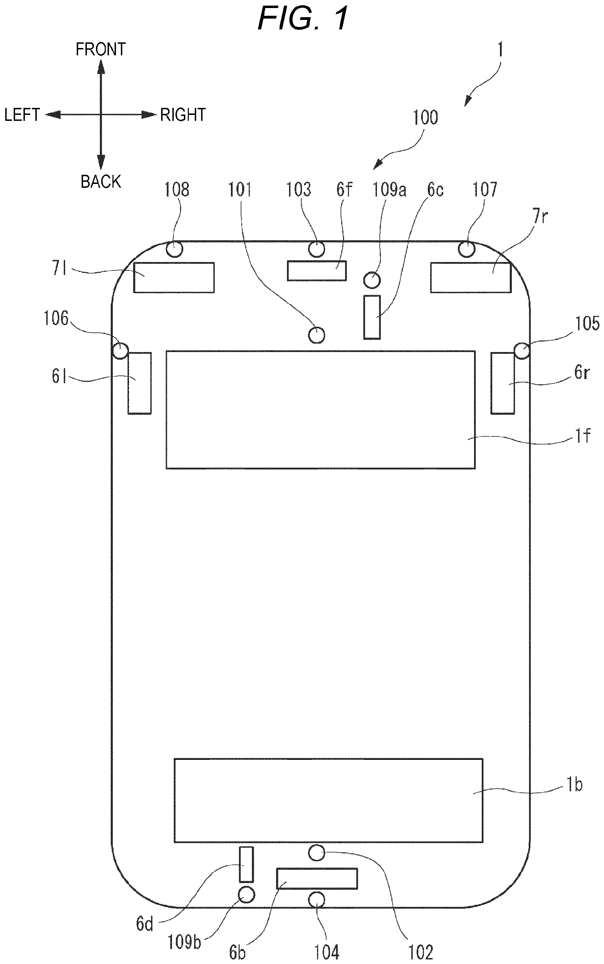

In the description of the present embodiment, a "left-right direction", a "front-back direction", and an "up-down direction" are appropriately referred to for convenience of description. These directions are relative directions set for a vehicle 1 shown in Fig. 1. Here, the "up-down direction" is a direction including an "up direction" and a "down direction". The "front-back direction" includes a "front direction" and a "back direction". The "left-right direction" includes a "left direction" and a "right direction".

### < <First Embodiment> >

Fig. 1 is a top view of the vehicle 1 on which a vehicle cleaner system 100 (hereinafter referred to as a cleaner system 100) according to the first embodiment is mounted. The vehicle 1 includes a cleaner system 100. In the present embodiment, the vehicle 1 is an automobile that can travel in an automatic driving mode.

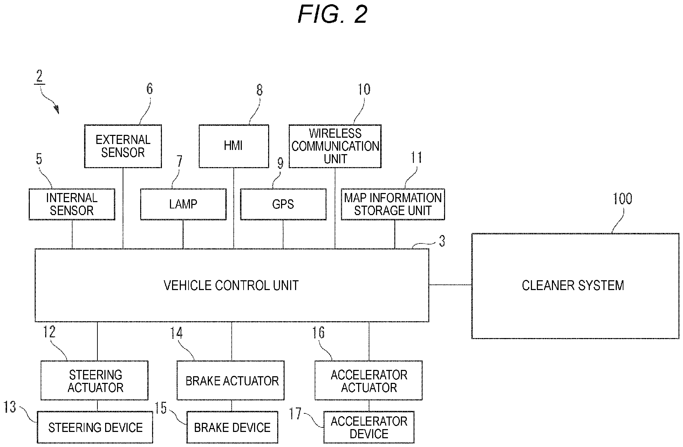

First, a vehicle system 2 of the vehicle 1 is described with reference to Fig. 2. Fig. 2 shows a block diagram of the vehicle system 2. As shown in Fig. 2, the vehicle system 2 includes a vehicle control unit 3, an internal sensor 5, an external sensor 6, a lamp 7, a human machine interface (HMI) 8, a global positioning system (GPS) 9, a wireless communication unit 10, and a map information storage unit 11. Further, the vehicle system 2 includes a steering actuator 12, a steering device 13, a brake actuator 14, a brake device 15, an accelerator actuator 16, and an accelerator device 17.

The vehicle control unit 3 includes an electronic control unit (ECU). The electronic control unit 3 includes a processor such as a central processing unit (CPU), a read only memory (ROM) in which various vehicle control programs are stored, and a random access memory (RAM) in which various vehicle control data are temporarily stored. A processor is configured to develop a program designated by various vehicle control programs stored in the ROM on the RAM and execute various kinds of processing in cooperation with the RAM. The vehicle control unit 3 is configured to control traveling of the vehicle 1.

The internal sensor 5 is a sensor that can acquire information of the host vehicle. The internal sensor 5 is, for example, at least one of an acceleration sensor, a speed sensor, a wheel speed sensor, and a gyro sensor. The internal sensor 5 is configured to acquire information of the host vehicle including a traveling state of the vehicle 1 and to output the information to the vehicle control unit 3.

The internal sensor 5 may include a seating sensor which detects whether a driver sits on a driver seat, a face direction sensor which detects a direction of a face of the driver, a human sensor which detects whether there is a person in the vehicle, and the like.

The external sensor 6 is a sensor that can acquire information outside the host vehicle. The external sensor is, for example, at least one of a camera, radar, LiDAR, and the like. The external camera 6 is configured to acquire information outside the host vehicle including a surrounding environment of the vehicle 1 (other vehicles, pedestrian, road shape, traffic sign, obstacle, or the like) and to output the information to the vehicle control unit 3. Alternatively, the external sensor 6 may include a weather sensor which detects a weather state, an illuminance sensor which detects illuminance of the surrounding environment of the vehicle 1, or the like.

The camera is, for example, a camera including an imaging element such as a charge-coupled device (CCD) and a complementary MOS (CMOS). The camera is a camera which detects visible light or an infrared camera which detects infrared rays.

The radar is millimeter wave radar, microwave radar, laser radar, or the like.

The LiDAR is an abbreviation of light detection and ranging or laser imaging detection and ranging. The LiDAR is a sensor which generally emits invisible light forward and acquires information such as a distance to an object, a shape of the object, a material of the object, and a color of the object based on the emitted light and return light.

The lamp 7 is at least one of a headlamp or a position lamp provided at a front portion of the vehicle 1, a rear combination lamp provided at a back portion of the vehicle 1, a turn signal lamp provided at the front portion or a side portion of the vehicle, and various lamps which inform pedestrians or drivers of other vehicles of a situation of the host vehicle.

The HMI 8 includes an input unit which receives input operation from a driver and an output unit which outputs traveling information or the like to the driver. The input unit includes a steering wheel, an accelerator pedal, a brake pedal, a driving mode changeover switch which switches a driving mode of the vehicle 1, or the like. The output unit is a display which displays various kinds of traveling information.

The GPS 9 is configured to acquire current position information of the vehicle 1 and output the acquired current position information to the vehicle control unit 3. The wireless communication unit 10 is configured to receive traveling information of other vehicles around the vehicle 1 from other vehicles and transmit the traveling information of the vehicle 1 to other vehicles (vehicle-to-vehicle communication). The wireless communication unit 10 is configured to receive infrastructure information from infrastructure equipment such as a traffic light and a marker light, and transmit the traveling information of the vehicle 1 to the infrastructure equipment (road-to-vehicle communication). The map information storage unit 11 is an external storage device such as a hard disk drive in which map information is stored and is configured to output map information to the vehicle control unit 3.

In a case where the vehicle 1 travels in an automatic driving mode, the vehicle control unit 3 automatically generates at least one of a steering control signal, an accelerator control signal, and a brake control signal based on the traveling state information, the surrounding environment information, the current position information, the map information, or the like. The steering actuator 12 is configured to receive the steering control signal from the vehicle control unit 3 and control the steering device 13 based on the received steering control signal. The brake actuator 14 is configured to receive the brake control signal from the vehicle control device 3 and control the brake device 15 based on the received brake control signal. The accelerator actuator 16 is configured to receive the accelerator control signal from the vehicle control unit 3 and control the accelerator device 17 based on the received accelerator control signal. In this way, traveling of the vehicle 1 is automatically controlled by the vehicle system 2 in the automatic driving mode.

On the other hand, in a case where the vehicle 1 travels in a manual driving mode, the vehicle control unit 3 generates the steering control signal, the accelerator control signal, and the brake control signal according to manual operation of a driver with respect to the accelerator pedal, the brake pedal, and the steering wheel. In this way, in the manual driving mode, since the steering control signal, the accelerator control signal, and the brake control signal are generated by the manual operation of the driver, traveling of the vehicle 1 is controlled by the driver.

Next, a driving mode of the vehicle 1 is described. The driving mode includes the automatic driving mode and the manual driving mode. The automatic driving mode includes a fully automatic driving mode, an advanced driving support mode, and a driving support mode. In the fully automatic driving mode, the vehicle system 2 automatically performs all of traveling control of the steering control, the brake control, and the accelerator control, and the driver is not in a state of driving the vehicle 1. In the advanced driving support mode, the vehicle system 2 automatically performs all of the traveling control of the steering control, the brake control, and the accelerator control, and the driver does not drive the vehicle 1 although he is in a state of driving the vehicle 1. In the driving support mode, the vehicle system 2 automatically performs a part of the traveling control of the steering control, the brake control, and the accelerator control, and the driver drives the vehicle 1 under the driving support of the vehicle system 2. On the other hand, in the manual driving mode, the vehicle system 2 does not automatically perform traveling control, and the driver drives the vehicle 1 without driving support of the vehicle system 2.

The driving mode of the vehicle 1 may be switched by operating the driving mode changeover switch. In this case, the vehicle control unit 3 switches the driving mode of the vehicle 1 between the four driving modes (the fully automatic driving mode, the advanced driving support mode, the driving support mode, and the manual driving mode) depending on operation of the driver on the driving mode changeover switch. The driving mode of the vehicle 1 may be automatically switched on the basis of information on a travel-permitted section in which an automatic driving vehicle can travel, information on a travel-prohibited section in which traveling of the automatic driving vehicle is prohibited, or information on the outside weather state. In this case, the vehicle control unit 3 switches the driving mode of the vehicle 1 based on these pieces of information. Further, the driving mode of the vehicle 1 may be automatically switched by using the seating sensor, the face orientation sensor, or the like. In this case, the vehicle control unit 3 switches the driving mode of the vehicle 1 based on an output signal from the seating sensor or the face orientation sensor.

Returning to Fig. 1, the vehicle 1 includes a front LiDAR 6f, a back LiDAR 6b, a right LiDAR 6r, a left LiDAR 61, a front camera 6c, and a back camera 6d as the external sensor 6. The front LiDAR 6f is configured to acquire information in front of the vehicle 1. The back LiDAR 6b is configured to acquire information behind the vehicle 1. The right LiDAR 6r is configured to acquire information on the right of the vehicle 1. The left LiDAR 61 is configured to acquire information on the left of the vehicle 1. The front camera 6c is configured to acquire information in front of the vehicle 1. The back camera 6d is configured to acquire information behind the vehicle 1.

In an example shown in Fig. 1, the front LiDAR 6f is provided at the front portion of the vehicle 1, the back LiDAR 6b is provided at the back portion of the vehicle 1, the right LiDAR 6r is provided at a right portion of the vehicle 1, and the left LiDAR 61 is provided at a left portion of the vehicle 1, but the present invention is not limited to the example. For example, the front LiDAR, the back LiDAR, the right LiDAR, and the left LiDAR may be collectively disposed on a ceiling portion of the vehicle 1.

The vehicle 1 includes a right headlamp 7r and a left headlamp 71 as the lamp 7. The right headlamp 7r is provided at a right-front portion of the vehicle 1, and the left headlamp 7 1 is provided at a left-front portion of the vehicle 1. The right headlamp 7r is provided on the right of the left headlamp 71.

The vehicle 1 includes a front window 1f and a rear window 1b.

The vehicle 1 includes a cleaner system 100 according to the embodiment of the present invention. The cleaner system 100 is a system which removes foreign substances such as water droplets, mud, and dust adhering to a cleaning object by using a cleaning medium. In the present embodiment, the cleaner system 100 includes a front window washer (hereinafter referred to as a front WW) 101, a back window washer (hereinafter referred to as a back WW) 102, a front LiDAR cleaner (hereinafter referred to as a front LC) 103, and a back LiDAR cleaner (hereinafter referred to as a back LC) 104, a right LiDAR cleaner (hereinafter referred to as a right LC) 105, a left LiDAR cleaner (hereinafter referred to as a left LC) 106, a right headlamp cleaner (hereinafter referred to as a right HC) 107, and a left headlamp cleaner (hereinafter referred to as a left HC) 108, a front camera cleaner 109a, and a back camera cleaner 109b. Each of the cleaners 101 to 109b has one or more nozzles, and discharges the cleaning medium such as a cleaning liquid or air from the nozzle toward the cleaning object.

The front WW 101 can be used for cleaning the front window 1f. The back WW 102 can be used for cleaning the rear window 1b. The front LC 103 can clean the front LiDAR 6f. The back LC 104 can clean the back LiDAR 6b. The right LC 105 can clean the right LiDAR 6r. The left LC 106 can clean the left LiDAR 61. The right HC 107 can clean the right headlamp 7r. The left HC 108 can clean the left headlamp 71. The front camera cleaner 109a can clean the front camera 6c. The back camera cleaner 109b can clean the back camera 6d. In the following description, the front camera cleaner 109a and the back camera cleaner 109b may be collectively called a camera cleaner 109.

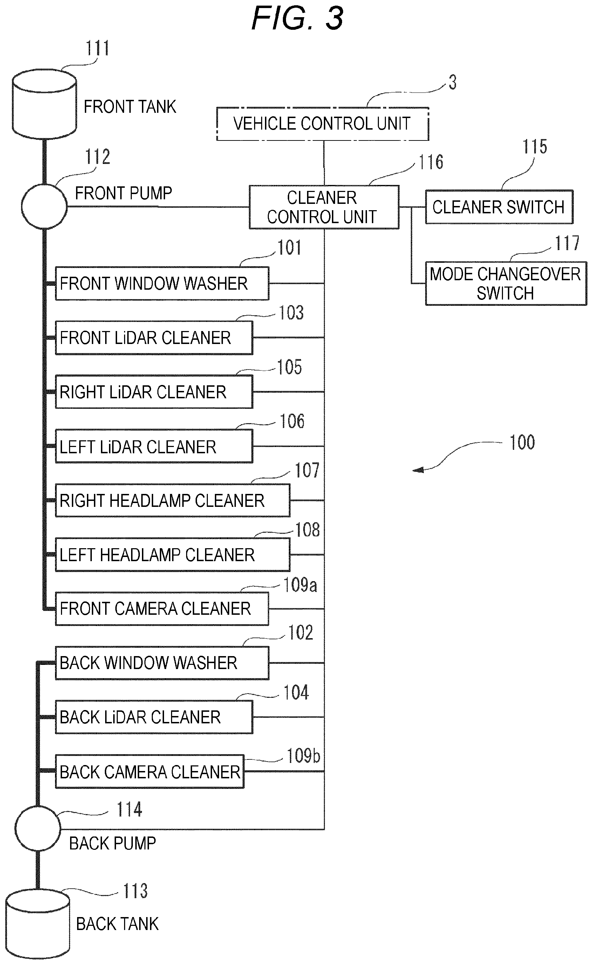

Fig. 3 is a block diagram of the cleaner system 100. In addition to the cleaners 101 to 109b, the cleaner system 100 includes a front tank 111, a front pump 112, a back tank 113, a back pump 114, a cleaner switch 115, a cleaner control unit 116 (control unit), and a mode changeover switch 117.

The front WW 101, the front LC 103, the right LC 105, the left LC 106, the right HC 107, the left HC 108, and the front camera cleaner 109a are connected to the front tank 111 via the front pump 112. The front pump 112 sends the cleaning liquid stored in the front tank 111 to the front WW 101, the front LC 103, the right LC 105, the left LC 106, the right HC 107, the left HC 108, and the front camera cleaner 109a.

The back WW 102, the back LC 104, and the back camera cleaner 109b are connected to the back tank 113 via the back pump 114. The back pump 114 sends the cleaning liquid stored in the back tank 113 to the back WW 102, the back LC 104, and the back camera cleaner 109b.

Each of the cleaners 101 to 109b is provided with an actuator which opens the nozzle to discharge the cleaning liquid to the cleaning object. The actuator provided in each of the cleaners 101 to 109b is electrically connected to the cleaner control unit 116. The cleaner control unit 116 is also electrically connected to the front pump 112, the back pump 114, and the vehicle control unit 3.

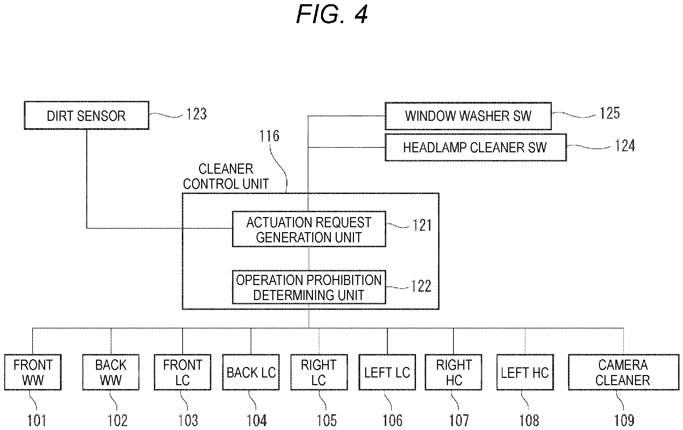

Fig. 4 is a more detailed block diagram of the cleaner system 100 according to the first embodiment of the present invention. As shown in Fig. 4, the cleaner control unit 116 includes an actuation request generation unit 121 and an operation prohibition determining unit 122. The actuation request generation unit 121 is connected to a dirt sensor 123.

The dirt sensor 123 can detect dirt of each of the front window 1f, the rear window 1b, the LiDARs 6f, 6b, 61, and 6r, the cameras 6c and 6d, and the headlamps 71 and 7r. In a case where the dirt sensor 123 determines that an object to be detected is dirty, a dirt signal is output to the actuation request generation unit 121. When the dirt signal is input for an object to be detectedt, the actuation request generation unit 121 outputs an actuation request signal for operating the cleaner so as to clean the object to be detected. For example, when the dirt sensor 123 determines that the front LiDAR 6f is dirty and a dirt signal for the front LiDAR 6f is input to the actuation request generation unit 121, the actuation request generation unit 121 outputs an actuation request signal for operating the front LC 103 to the operation prohibition determining unit 122 for the front LiDAR 6f.

In the present embodiment, the operation prohibition determining unit 122 is connected to all of the sensor cleaners 103 to 106, 109a, and 109b (the front camera cleaner 109a and the back camera cleaner 109b are summarized and shown as 109 in Fig. 4).

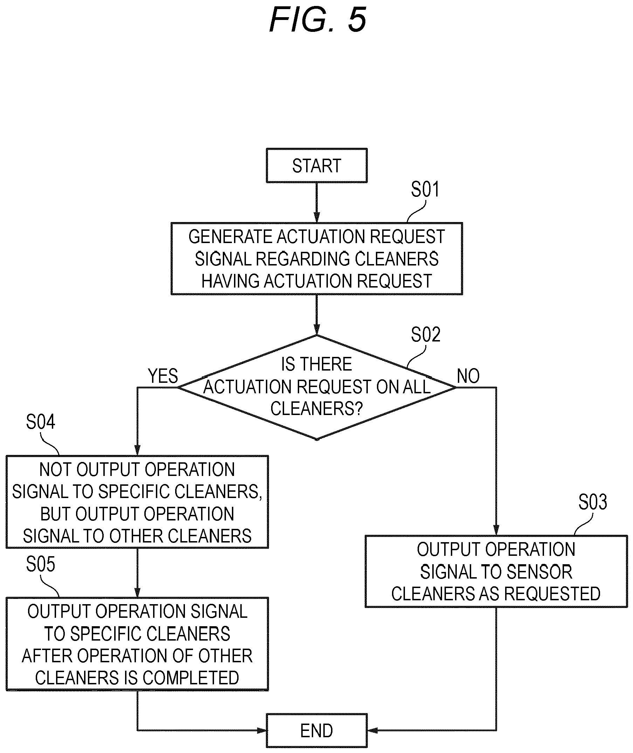

Fig. 5 is a flow chart of processing executed by the cleaner control unit 116. As shown in Fig. 5, the actuation request generation unit 121 generates an actuation request signal on the sensor cleaners 103 to 106, 109a, and 109b which clean the sensor determined to be dirty, and outputs the operation re quest signal to the operation prohibition determining unit 122 (step S01).

The operation prohibition determining unit 122 determines whether the actuation request signal is input for all of the sensor cleaners 103 to 106, 109a, and 109b (step S02). If the actuation request signal is not input to the operation prohibition determining unit 122 for at least one of the sensor cleaners 103 to 106, 109a, and 109b (step S02: No), the operation prohibition determining unit 122 outputs an operation signal to all of the sensor cleaners 103 to 106, 109a, and 109b whose actuation is requested, and operates the sensor cleaners 103 to 106, 109a, and 109b (step S03).

On the other hand, in a case where the actuation request signal is input to the operation prohibition determining unit 122 for all of the sensor cleaners 103 to 106, 109a, and 109b (step S02: Yes), the operation prohibition determining unit 122 does not output the operation signal to one or more specific sensor cleaners 103 to 106, 109a, and 109b, but outputs the operation signal to the other sensor cleaners 103 to 106, 109a, and 109b among the sensor cleaners 103 to 106, 109a, and 109b whose actuation is requested (step S04). After the actuation of the other sensor cleaners 103 to 106, 109a, and 109b is completed, the operation prohibition determining unit 122 may output the operation signal to the specific sensor cleaners 103 to 106, 109a, and 109b which did not output the operation signal in step S04 (step S05).

In step S04, the operation prohibition determining unit 122 can decide the sensor cleaners 103 to 106, 109a, and 109b which output the operation signal based on a predetermined priority order. For example, information acquired by the front LiDAR 6f or the front camera 6c before information in front of the vehicle is acquired is important during normal traveling. Therefore, in step S04, the operation signal is output to the front LC 103 which cleans the front LiDAR 6f and the front camera cleaner 109a which cleans the front camera 6c, and the operation signal cannot be output to the other sensor cleaners 104 to 106 and 109b. Or conversely, in step S04, the operation signal may be output to the other sensor cleaners 104 to 106 and 109b, and the operation signal may not be output to the front LC 103 and the front camera cleaner 109a. The sensor cleaners 103 to 106, 109a, and 109b operated previously may be one or a plurality of sensor cleaners.

Alternatively, in step S04, the operation prohibition determining unit 122 may be configured to output the operation signal to the sensor cleaners 103 to 106, 109a, and 109b in an order where an interval from the previous actuation of the sensor cleaners 103 to 106, 109a, and 109b to now is long.

For example, in a case where the interval from the previous actuation of the front LC 103 to now is 14 days and the interval from the previous actuation of the other sensor cleaners 104 to 106, 109a, and 109b to now is 20 days, a dirt degree of the front LC 103 may be lower than that of the other sensor cleaners 104 to 106, 109a, and 109b. Therefore, in step S04, the operation signal may be not output to the front LC 103 having the shortest interval, but output to the other sensor cleaners 104 to 106, 109a, and 109b.

Alternatively, the interval is short, that is to say, the sensor is a sensor which is easy to be dirty. Therefore, the operation signal may be output to the sensor cleaners 103 to 106, 109a, and 109b in an order where the interval from the previous actuation of the sensor cleaners 103 to 106, 109a, and 109b to now is short. Therefore, in step S04, the operation signal may be output to the front LC 103 having the shortest interval, but not output to the other sensor cleaners 104 to 106, 109a, and 109b.

As described above, the cleaner system 100 of the present embodiment includes the plurality of sensor cleaners 103 to 106, 109a, and 109b capable of respectively cleaning a plurality of external sensors 6 in which at least one of a detection method, a object to be detected, a detection direction, and a detection timing is different from each other; and
the cleaner control unit 116 which operates the plurality of sensor cleaners 103 to 106, 109a, and 109b depending on a signal to be input, in which
the cleaner control unit 116 controls all of the sensor cleaners 103 to 106, 109a, and 109b so as not to be operated at the same time.

During operation of the sensor cleaners 103 to 106, 109a and 109b, since a cleaning liquid is discharged to, for example, a lens element or an outer cover of the camera 6c, it is difficult to obtain accurate information from the external sensor 6 to be cleaned.

However, according to the cleaner system 100 according to the present embodiment, the plurality of sensor cleaners 103 to 106, 109a, and 109b capable of respectively cleaning the plurality of sensors 6f, 6b, 6r, 61, 6c, 6d in which at least one of a detection method, a object to be detected, a detection direction, and a detection timing is different from each other are included. The cleaner control unit 116 controls all of the cleaners 103 to 106, 109a, and 109b so as not to be operated at the same time. Therefore, the vehicle 1 can acquire accurate information from at least one external sensor 6. According to the cleaner system 100 according to the present embodiment, it is possible to continually obtain accurate information from the external sensor 6 at all times.

Incidentally, "not all of the sensor cleaners 103 to 106, 109a, and 109b are operated at the same time" basically means that "there is no state in which all of the sensor cleaners 103 to 106, 109a, and 109b are operated at a certain moment". However, for example, even after the sensor cleaner completes the actuation, the cleaning liquid may remain on a surface of the cleaning object, and even in this case, it is difficult to obtain accurate information from the sensor on which the cleaning liquid remains. Generally, after the cleaning liquid is discharged to the sensor, the cleaning liquid is expected to fall off after an elapse of about 5 seconds. Therefore, "not all of the sensor cleaners 103 to 106, 109a, and 109b are operated at the same time" means that "there is no state in which all of the sensor cleaners 103 to 106, 109a, and 109b are operated in a range of 5 seconds".

In the present embodiment, the cleaner control unit 116 controls all sensor cleaning units which clean the sensors in which the detection direction is the same front and at least one of the detection method, the object to be detected, and the detection timing is different from each other so as not to be operated at the same time. In the present embodiment, the front LiDAR 6f and the front camera 6c have the same detection direction, but at least one of the detection method, the object to be detected, and the detection timing is different from each other. The cleaner control unit 116 controls the front LiDAR 6f and the front camera 6c so as not to be operated at the same time. Therefore, in the present embodiment, front information can be continually obtained from at least one of the front LiDAR 6f and the front camera 6c.

In the above-described embodiment, as shown in Fig. 4, the actuation request generation unit 121 is also connected to a headlamp cleaner switch 124 in addition to the dirt sensor 123. In addition to the sensor cleaners 103 to 106, 109a, and 109b, the operation prohibition determining unit 122 is also connected to the right HC 107 and the left HC 108.

The headlamp cleaner switch 124 is provided in a vehicle compartment. The headlamp cleaner switch 124 is a switch that can be operated by an occupant. When the headlamp cleaner switch 124 is operated, a signal thereof is output to the actuation request generation unit 121. When the signal from the headlamp cleaner switch 124 is input, the actuation request generation unit 121 outputs the actuation request signal to the operation prohibition determining unit 122 to operate the right HC 107 and the left HC 108 which can respectively clean the right headlamp 7r and the left headlamp 71.

In step S02 described above, the operation prohibition determining unit 122 may be configured to determine whether the actuation request signal is input for all of the sensor cleaners 103 to 106, 109a, and 109b and the right HC 107 and the left HC 108.

If the actuation request signal is not input to the operation prohibition determining unit 122 for at least one of the sensor cleaners 103 to 106, 109a, and 109b and the right HC 107 and the left HC 108 (step S02: No), the operation prohibition determining unit 122 outputs an operation signal to all of the cleaners 103 to 109b whose actuation is requested, and operates the cleaners 103 to 109b whose actuation is requested (step S03).

On the other hand, in a case where the actuation request signal is input to the operation prohibition determining unit 122 for all of the sensor cleaners 103 to 106, 109a, and 109b and the right HC 107 and the left HC 108 (step S02: Yes), the operation prohibition determining unit 122 does not output the operation signal to one or more specific cleaners 103 to 109b, but outputs the operation signal to the other cleaners 103 to 109b among the cleaners 103 to 109b whose actuation is requested (step S04). After the actuation of the other cleaners 103 to 109b is completed, the operation prohibition determining unit 122 outputs the operation signal to the specific cleaners 103 to 109b which did not output the operation signal in step S04 (step S05).

Unlike the present embodiment, for example, in a case where all of the sensor cleaners 103 to 106, 109a, 109b and the right HC 107 and the left HC 108 are configured to be operable at the same time, the following inconvenience may occur. Since it is difficult to obtain accurate information from the front LiDAR 6f during cleaning of the front LiDAR 6f, manual driving may be performed. During cleaning of the right headlamp 7r, since an accurate light distribution pattern is not obtained and is not suitable for manual driving, automatic driving is preferably performed based on the information output from the front LiDAR 6f. However, when the front LiDAR 6f and the right headlamp 7r are cleaned at the same time, it is difficult to obtain accurate information.

In contrast, according to the cleaner system 100 according to the present embodiment, not all of the sensor cleaners 103 to 106, 109a, and 109b and the right LC 107 and the left LC 108 are operated at the same time. Therefore, it is always possible to obtain accurate information from the front LiDAR 6f or to accurately obtain information in front of the vehicle via an accurate light distribution pattern by a driver, and the vehicle is easily controlled based on precise information.

A window washer switch 125 is provided in the vehicle compartment. The window washer switch 125 is a switch that can be operated by an occupant. When the window washer switch 125 is operated, a signal thereof is output to the actuation request generation unit 121. When the signal from the window washer switch 125 is input, the actuation request generation unit 121 outputs an actuation request signal to the operation prohibition determining unit 122 to operate the front WW 101 and the back WW 102 which can clean the front window 1f and the rear window 1b, respectively.

Unlike the present embodiment, for example, in a case where all of the sensor cleaners 103 to 106, 109a, 109b and the front WW 101 and the back WW 102 are configured to be operable at the same time, the following inconvenience may occur. For example, since it is difficult to obtain accurate information from the front LiDAR 6f during cleaning of the front LiDAR 6f, manual driving may be performed. During cleaning of the front window 1f, since it is difficult for the driver to obtain accurate information, automatic driving is preferably performed based on the information output from the front LiDAR 6f. However, when the front LiDAR 6f and the front window 1f are cleaned at the same time, it is difficult to obtain accurate information.

According to the cleaner system 100 according to the present embodiment, not all of the sensor cleaners 103 to 106, 109a, and 109b and the front WW 101 and the back WW 102 are operated at the same time. Therefore, it is always possible to obtain accurate information from the front LiDAR 6f or to accurately obtain information in front of the vehicle by a driver through the front window 1f, and the vehicle is easily controlled based on precise information.

In the first embodiment described above, when the dirt signal is input for a cleaning object, the actuation request generation unit 121 is configured to output an actuation request signal for operating the cleaner so as to clean the cleaning object, which is described as an example, and the present invention is not limited thereto. The present invention is characterized in that, in a system configured to operate a plurality of cleaners in a case where a dirt signal is input for a single cleaning object, not all of the cleaners are operated at the same time. Modifications of the first embodiment will be described below.

When a dirt signal is input to a certain cleaning object, the actuation request generation unit 121 may be configured to operate the plurality of cleaners 101 to 109b so as to clean a plurality of cleaning objects including the cleaning object, and the operation prohibition determining unit 122 may be configured not to operate at least one of the cleaners 101 to 109b. Alternatively, when the dirt signal is input for the external sensor 6, the actuation request generation unit 121 may be configured to output an actuation request signal to all of the cleaners 101 to 109b. In this case, the operation prohibition determining unit 122 may be configured such that at least one of the cleaners 101 to 109b other than a cleaner is not operated, and the cleaner cleans an external sensor 6 to which the dirt signal is input among the plurality of external sensors 6 having a common detection method.

For example, when the dirt signal for the front LiDAR 6f is input to the actuation request generation unit 121, the actuation request generation unit 121 may be configured to output an actuation request signal for operating all of the cleaners 101 to 109b. In this case, the operation prohibition determining unit 122 may be configured not to output the operation signal to the cleaner which cleans an object having the lowest priority order except for a cleaning object which is an object of the dirt signal, but output the operation signal to other cleaners based on the priority order of the cleaning object which is an object of the dirt signal. For example, the operation signal may be not output to the cleaners 101 to 109b which clean the cleaning object having the lowest priority except for the front LiDAR 6f, but the operation signal may be output for the other cleaners 101 to 109b including the front LiDAR 6f based on the priority order described above among the cleaning objects except for the front LiDAR 6f which is an object of the dirt signal. In this configuration, the operation prohibition determining unit 122 may be configured not to output the operation signal to the cleaner which cleans the cleaning object having the shortest interval from the previous actuation to now instead of the cleaning object having the lowest priority order.

Alternatively, when the dirt signal is input for the external sensor 6, the cleaner control unit 116 may be configured to output the actuation request signal only to the plurality of sensor cleaners 103 to 106, 109a, and 109b which clean the plurality of external sensors 6 having the common detection method with the external sensor 6 which is an object of the dirt signal among all of the cleaners 101 to 109b. For example, when the dirt signal is input for the front LiDAR 6f to the cleaner control unit 116, the cleaner control unit 116 may be configured to output the operation signal only to the front LC 103, the back LC 104, the right LC 105, and the left LC 106, and not to output the operation signal to the front WW 101, the back WW 102, the right HC 107, the left HC 108, the front camera cleaner 109a, and the back camera cleaner 109b among all of the cleaners 101 to 109b.

Alternatively, when the dirt signal is input for the external sensor 6, the cleaner control unit 116 may be configured to output the actuation request signal only to the plurality of sensor cleaners 101 to 109b which clean the plurality of cleaning objects having different detection methods from the sensor 6 which is an object of the dirt signal and the sensor 6 which is an object of the dirt signal among all of the cleaners 101 to 109b. For example, when the dirt signal is input for the front LiDAR 6f to the cleaner control unit 116, the cleaner control unit 116 may be configured to output the operation signal only to the front LC 103, the front WW 101, the back WW 102, the right HC 107, the left HC 108, the front camera cleaner 109a, and the back camera cleaner 109b, and not to output the operation signal to the back LC 104, the right LC 105, and the left LC 106 among all of the cleaners 101 to LC109b.

The cleaner control unit 116 is configured to determine a cleaner that is not operated/operated at the same time when the cleaning object and the detection method have been detected are common/different from each other, the present invention is not limited thereto.

The cleaner control unit 116 may be configured to determine cleaners which are operated/not operated at the same time in view of that the cleaning object where dirt is detected and the object to be detected are common/different. For example, the front LiDAR 6f and the front camera 6c are common in detecting an obstacle in front of the vehicle. Therefore, the cleaner control unit 116 may be configured such that the front LC 103 and the front camera cleaner 109a are not operated at the same time.

The cleaner control unit 116 may be configured to determine cleaners which are operated/not operated at the same time in view of that the cleaning object where dirt is detected and the detection timing are common/different. For example, in a case where the front LiDAR 6f and the front camera 6c are configured to acquire information in front of the vehicle in synchronization, the cleaner control unit 116 may be configured not to operate other cleaners in a case where the front LC 103 and the front camera cleaner 109a are operated at the same time.

The cleaner control unit 116 may be configured to determine cleaners which are operated/not operated at the same time in view of that the cleaning object where dirt is detected and an installation position are common/different. For example, the front camera 6c and the front window 1f are common in that they are installed on the front portion of the vehicle. Therefore, the cleaner control unit 116 may be configured such that the front camera cleaner 109a and the front WW 101 are not operated at the same time.

The cleaner control unit 116 may be configured to determine cleaners which are operated/not operated at the same time in view of that tanks which store cleaning liquid used by the cleaner of the cleaning object where dirt is detected are common/different. For example, the LC 103 before cleaning the front LiDAR 6f is connected to the front tank 111. As shown in Fig. 3, the front tank 111 is connected to the front WW 101, the right LC 105, the left LC 106, the right HC 107, the left HC 108, and the front camera cleaner 109a in addition to the front LC 103. Therefore, the cleaner control unit 116 may be configured such that the front WW 101, the front LC 103, the right LC 105, the left LC 106, the right HC 107, the left HC 108, and the front camera cleaner 109a are not operated at the same time.

The cleaner control unit 116 may be configured to determine cleaners which are operated/not operated at the same time in view of that pumps which send out the cleaning liquid to the cleaning object where dirt is detected are common/different. The LC 103 before cleaning the front LiDAR 6f is connected to the front pump 112. As shown in Fig. 3, the front pump 112 is connected to the front WW 101, the right LC 105, the left LC 106, the right HC 107, the left HC 108, and the front camera cleaner 109a in addition to the front LC 103. Therefore, the cleaner control unit 116 may be configured such that the front WW 101, the front LC 103, the right LC 105, the left LC 106, the right HC 107, the left HC 108, and the front camera cleaner 109a are not operated at the same time.

The cleaner control unit 116 may be configured not to operate all of the sensor cleaners 103 to 106, 109a, and 109b at the same time. Alternatively, the cleaner control unit 116 may be configured not to operate all of the cleaners 101 to 109b including the front WW 101, the back WW 102, the right HC 107, and the left HC 108 other than the sensor cleaner at the same time.

Alternatively, the cleaner control unit 116 may be configured not to operate all of the plurality of sensor cleaners 103 to 106, 109a, and 109b capable of respectively cleaning a plurality of sensors in which the detection method is the same and at least one of the object to be detected, the detection direction, and the detection timing is different from each other. For example, detection methods of the front LiDAR 6f, the back LiDAR 6b, the right LiDAR 6r, and the left LiDAR 6f are common. Therefore, the cleaner control unit 116 may be configured such that not all of the front LC 103, the back LC 104, the right LC 105, and the left LC 106 operate at the same time.

Alternatively, the cleaner control unit 116 may be configured not to operate all of the plurality of sensor cleaners 103 to 106, 109a, and 109b capable of respectively cleaning a plurality of sensors in which the object to be detected is the same and at least one of the detection method, the detection direction, and the detection timing is different from each other. For example, the front LiDAR 6f and the front camera 6c are common in detecting the front obstacle. Therefore, the cleaner control unit 116 may be configured such that the front LC 103 and the front camera cleaner 109a do not operate at the same time.

Alternatively, the cleaner control unit 116 may be configured not to operate all of the plurality of sensor cleaners 103 to 106, 109a, and 109b capable of respectively cleaning a plurality of sensors in which the detection direction is the same and at least one of the detection method, the object to be detected, and the detection timing is different from each other. For example, the front LiDAR 6f and the front camera 6c are common in that the detection direction is forward. Therefore, the cleaner control unit 116 may be configured such that the front LC 103 and the front camera cleaner 109a do not operate at the same time.

Alternatively, the cleaner control unit 116 may be configured not to operate all of the plurality of sensor cleaners 103 to 106, 109a, and 109b capable of respectively cleaning a plurality of sensors in which the detection timing is the same and at least one of the detection method, the object to be detected, and the detection direction is different from each other. For example, detection timings of the front LiDAR 6f, the back LiDAR 6b, the right LiDAR 6r, and the left LiDAR 6f may be the same. Therefore, the cleaner control unit 116 may be configured such that not all of the front LC 103, the back LC 104, the right LC 105, and the left LC 106 operate at the same time.

### <<Second Embodiments

Next, a vehicle cleaner system according to a second embodiment will be described.

Reference numerals of elements of a vehicle cleaner system 1100 (hereinafter referred to as a cleaner system 1100) according to the second embodiment are obtained by adding 1000 to the reference numerals denoting the elements of the cleaner system 100 according to the first embodiment. The elements of the second embodiment common to those of the first embodiment are denoted by the same reference numeral, and descriptions thereof are omitted as appropriate. Since the vehicle 1 to which the cleaner system 1100 according to the present embodiment is applied is the same as the vehicle 1 of the first embodiment described with Fig. 1 to Fig. 3, a detailed description thereof is omitted.

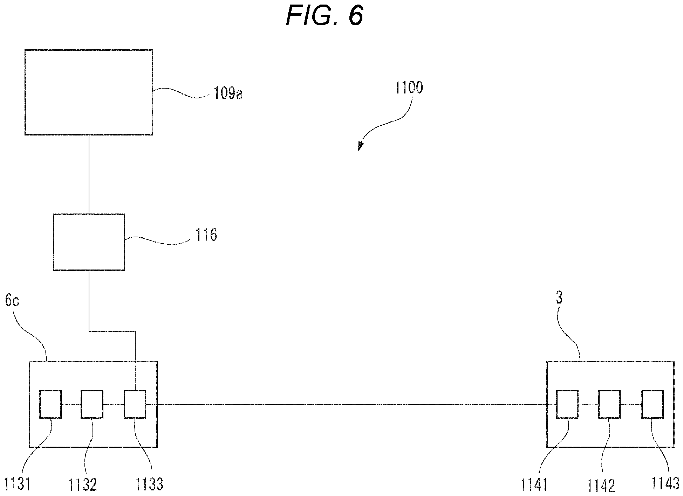

Fig. 6 is a schematic view of the cleaner system 1100 according to the second embodiment of the present invention. Fig. 6 shows a relationship between the front camera cleaner 109a, the cleaner control unit 116, the front camera 6c, and the vehicle control unit 3 taking the front camera 6c as an example of the external sensor 6.

As shown in Fig. 6, the front camera 6c includes an imaging unit 1131, a camera side temporary storage unit 1132, and a transmission unit 1133. The imaging unit 1131 takes in external light and converts it into an electrical signal, and outputs the electrical signal to the temporary storage unit. The camera side temporary storage unit 1132 temporarily stores the electrical signal input from the imaging unit 1131 as memory information. The transmission unit 1133 transmits the memory information stored in the camera side temporary storage unit 1132 as an electric signal to the vehicle control unit 3.

The vehicle control unit 3 includes a receiving unit 1141, a vehicle side temporary storage unit 1142, and a calculation unit 1143. The electrical signal output from the front camera 6c is input to the receiving unit 1141. The receiving unit 1141 temporarily stores the electric signal input from the front camera 6c as memory information in the vehicle side temporary storage unit 1142. The calculation unit 1143 calculates a signal used for vehicle control based on the memory information stored in the vehicle side temporary storage unit 1142 and output from the internal sensor 5. The calculation unit 1143 automatically generates at least one of a steering control signal, an acceleration control signal, and a brake control signal.

When a signal for operating the front camera cleaner 109a is input from the cleaner switch 115, when a signal indicating that the front camera 6c is dirty is input from a dirt sensor (not shown), or when a predetermined time has elapsed since the previous operation of the front camera cleaner 109a, the cleaner control unit 116 outputs the operation signal for operating the front camera cleaner 109a to the front camera cleaner 109a.

In the cleaner system 1100 of the present embodiment, the cleaner control unit 116 outputs an in-operation signal to the transmission unit 1133 of the front camera 6c when the front camera cleaner 109a is operating, and the in-operation signal indicates that the front camera cleaner 109a is operating.

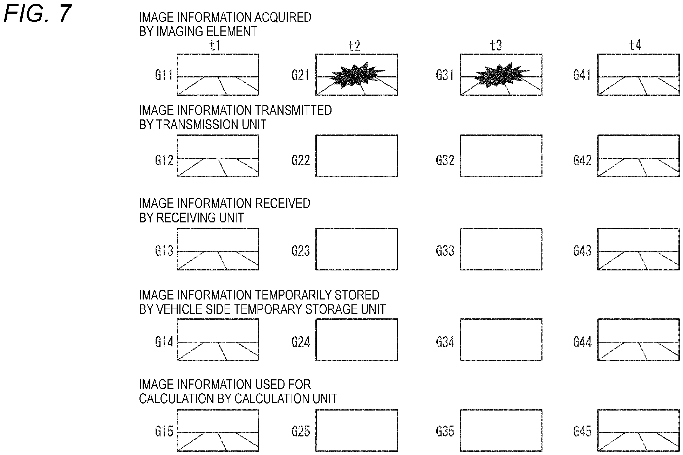

Fig. 7 shows image information delivered by the front camera 6c and the vehicle control unit 3. Fig. 7 shows image information acquired by the imaging unit 1131 of the front camera 6c, image information output to the vehicle control unit 3 by the transmission unit 1133 of the front camera 6c, image information input to the receiving unit 1141 of the vehicle control unit 3, image information temporarily stored in the vehicle side temporary storage unit 1142, and image information used when the calculation unit 1143 of the vehicle control unit 3 calculates the signal used for vehicle control.

In a case where the in-operation signal is not output from the cleaner control unit 116, image information G11 acquired by the imaging unit 1131 at a time t1 is output to the vehicle control unit 3 by the transmission unit 1133 of the front camera 6c as image information G12. The image information G12 output to the vehicle control unit 3 by the transmission unit 1133 is received by the receiving unit 1141 as image information G13. The image information G13 received by the receiving unit 1141 is temporarily stored by the vehicle side temporary storage unit 1142 as image information G14. The image information G14 temporarily stored by the vehicle side temporary storage unit 1142 is used for calculation by the calculation unit 1143 as image information G15. Thereafter, image information G21 acquired by the imaging unit 1131 at a time t2 becomes image information G22, image information G23, image information G24, and image information G25 in order.

The cleaner control unit 116 in the present embodiment outputs the in-operation signal to the transmission unit 1133 of the front camera 6c when the front camera cleaner 109a is operating, and the in-operation signal indicates that the front camera cleaner 109a is operating. When the in-operation signal is input from the cleaner control unit 116, the transmission unit 1133 of the front camera 6c does not transmit image information to the vehicle control unit 3.

In Fig. 7, the front camera cleaner 109a does not operate at the time t1, the front camera cleaner 109a operates at times t2 and t3, and the front camera cleaner 109a stops operating at a time t4. The cleaner control unit 116 outputs the in-operation signal to the transmission unit 133 of the front camera 6c at the times t2 and t3.

Regarding the image information G11 acquired by the imaging unit 1131 at the time t1, the transmission unit 1133 of the front camera 6c receives the image information G11 and outputs the image information G12 to the vehicle control unit 3.

Regarding the image information G21 acquired by the imaging unit 1131 at the time t2, the transmission unit 1133 of the front camera 6c receives the image information G21 but does not output it to the vehicle control unit 3, so that the image information G22 output by the transmission unit 1133 is blank.

Regarding image information G31 acquired by the imaging unit 1131 at the time t3, the transmission unit 1133 of the front camera 6c receives the image information G31 but does not output it to the vehicle control unit 3, so that the image information G32 output by the transmission unit 1133 is blank.

Regarding image information G41 acquired by the imaging unit 1131 at the time t4, the transmission unit 1133 of the front camera 6c receives the image information G41 and outputs image information G42 to the vehicle control unit 3.

Since the image information acquired by the imaging unit 1131 at the times t2 and t3 is not transmitted to the vehicle control unit 3 by the transmission unit 1133 of the front camera 6c, the image information is not input to the calculation unit 1143 of the vehicle control unit 3 at the times t2 and t3.

As shown in Fig. 7, the image information G21, G31 acquired by the imaging unit 1131 during operation of the front camera cleaner 109a is unclear since a cleaning liquid is applied to a camera lens or outer cover. Therefore, unlike the present embodiment, in a case where the unclear image information is output to the vehicle control unit 3, the vehicle control unit 3 has to control the vehicle based on information with low reliability.

According to the cleaner system 1100 according to the present embodiment, since the image information G21, G31 acquired by the imaging unit 1131 during the operation of the front camera cleaner 109a is not output to the vehicle control unit 3, a situation in which the vehicle control unit 3 controls the vehicle 1 based on information with low reliability is avoided.

When the in-operation signal is input from the cleaner control unit 116, the transmission unit 1133 of the front camera 6c may be configured to output the image information G12 to the vehicle control unit 3, and the image information G12 is output to a newest vehicle control unit 3 to which the in-operation signal is not input.

### <First Modification>

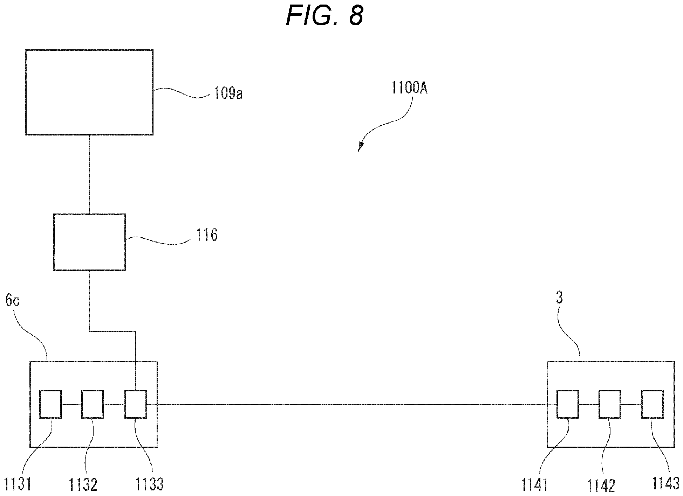

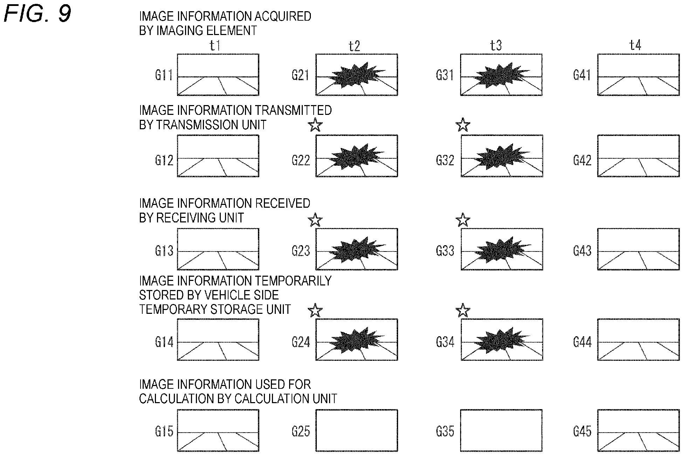

Next, a first modification of the cleaner system 1100 according to the second embodiment will be described using Fig. 8 and Fig. 9. Fig. 8 is a schematic view of a cleaner system 1100A according to the first modification corresponding to Fig. 6. Fig. 9 shows image information delivered by the front camera 6c and the vehicle control unit 3 corresponding to Fig. 7 of the cleaner system 1100A.

As shown in Fig. 8, in the first modification, similarly to the second embodiment, the cleaner control unit 116 outputs an in-operation signal to the transmission unit 1133 of the front camera 6c when the front camera cleaner 109a is operating, and the in-operation signal indicates that the front camera cleaner 109a is operating.

In Fig. 9, an asterisk indicates a mark attached to the image information. When the in-operation signal is input from the cleaner control unit 116, the transmission unit 1133 of the front camera 6c outputs the image information G22 with the mark to the vehicle control unit 3. The transmission unit 1133 may transmit the mark together with the image information G22 or separately from the image information G22.

In Fig. 9, the front camera cleaner 109a does not operate at the time t1, the front camera cleaner 109a operates at times t2 and t3, and the front camera cleaner 109a stops operating at a time t4. The cleaner control unit 1116 outputs the in-operation signal to the transmission unit 1133 of the front camera 6c at the times t2 and t3.

Regarding the image information G11 acquired by the imaging unit 1131 at the time t1, the transmission unit 1133 of the front camera 6c receives the image information G11 and outputs the image information G12 to the vehicle control unit 3.

Regarding the image information G21 acquired by the imaging unit 1131 at the time t2, the transmission unit 1133 of the front camera 6c receives the image information G21 and outputs the image information G22 with the mark to the vehicle control unit 3.

Regarding the image information G31 acquired by the imaging unit 1131 at the time t3, the transmission unit 1133 of the front camera 6c receives the image information G31 and outputs the image information G32 with the mark to the vehicle control unit 3.

Regarding image information G41 acquired by the imaging unit 1131 at the time t4, the transmission unit 1133 of the front camera 6c receives the image information G41 and outputs image information G42 to the vehicle control unit 3.

The image information acquired by the imaging unit 1131 at the times t2 and t3 is marked by the transmission unit 1133 of the front camera 6c and is transmitted to the vehicle control unit 3.

In the first modification, the calculation unit 1143 is configured such that the image information to which the mark is attached is not used for calculation. Therefore, as shown in Fig. 9, the cleaning liquid is applied, and the unclear image information G24, G34 is not used as the image information used for calculation by the vehicle control unit 3. In this way, even in the first modification, a situation in which the vehicle control unit 3 controls the vehicle 1 based on information with low reliability is avoided.

### <Second Modification>

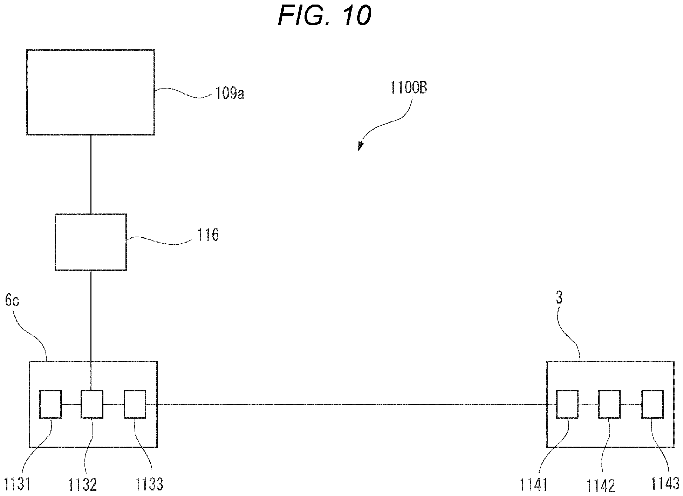

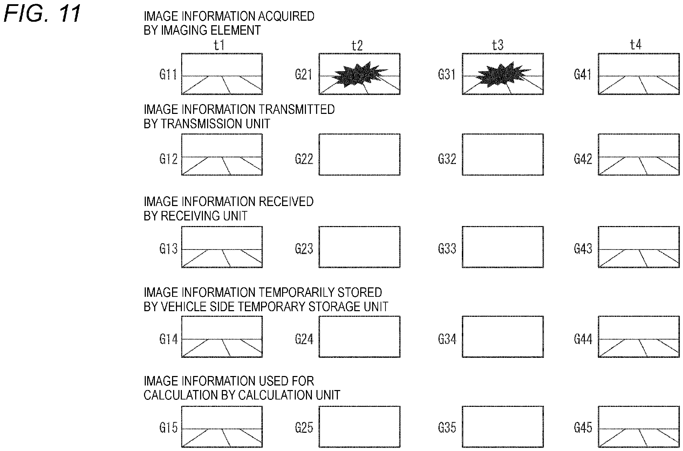

Next, a first modification of the cleaner system 1100 according to the second embodiment will be described using Fig. 10 and Fig. 11. Fig. 10 is a schematic view of a cleaner system 1100B according to the second modification corresponding to Fig. 6. Fig. 11 shows image information delivered by the front camera 6c and the vehicle control unit 3 corresponding to Fig. 7 of the cleaner system 1100B.

As shown in Fig. 10, in the second modification, the cleaner control unit 116 outputs an in-operation signal to the camera side temporary storage unit 1132 when the front camera cleaner 109a is operating, and the in-operation signal indicates that the front camera cleaner 109a is operating.

The cleaner control unit 116 in the second modification outputs the in-operation signal to the transmission unit 1133 of the front camera 6c when the front camera cleaner 109a is operating, and the in-operation signal indicates that the front camera cleaner 109a is operating. When the in-operation signal is input from the cleaner control unit 116, the transmission unit 1133 of the front camera 6c does not transmit image information to the vehicle control unit 3.

As shown in Fig. 11, the front camera cleaner 109a does not operate at the time t1, the front camera cleaner 109a operates at times t2 and t3, and the front camera cleaner 109a stops operating at a time t4. The cleaner control unit 116 outputs the in-operation signal to the camera side temporary storage unit 1132 at the times t2 and t3.

Regarding the image information G11 acquired by the imaging unit 1131 at the time t1, the temporary storage unit of the front camera 6c stores the image information G11, and the transmission unit 1133 outputs the image information G12 to the vehicle control unit 3.

Regarding the image information G21 acquired by the imaging unit 1131 at the time t2, the temporary storage unit of the front camera 6c does not receive the image information G21. Therefore, the transmission unit 1133 outputs blank image information G22 to the vehicle control unit 3.

Regarding the image information G31 acquired by the imaging unit 1131 at the time t3, the temporary storage unit of the front camera 6c does not receive the image information G31. Therefore, the transmission unit 1133 outputs blank image information G32 to the vehicle control unit 3.

Regarding image information G41 acquired by the imaging unit 1131 at the time t4, the temporary storage unit of the front camera 6c receives the image information G41 and outputs image information G42 to the vehicle control unit 3.

Since the image information acquired by the imaging unit 1131 at the times t2 and t3 is not stored by the camera side temporary storage unit 1132, the image information is not input to the calculation unit 1143 of the vehicle control unit 3 at the times t2 and t3.

Even by the cleaner system 1100B according to the second modification, since the image information G21, G31 acquired by the imaging unit 1131 during the operation of the front camera cleaner 109a is not output to the vehicle control unit 3, a situation in which the vehicle control unit 3 controls the vehicle 1 based on information with low reliability is avoided.

### <Third Modification>

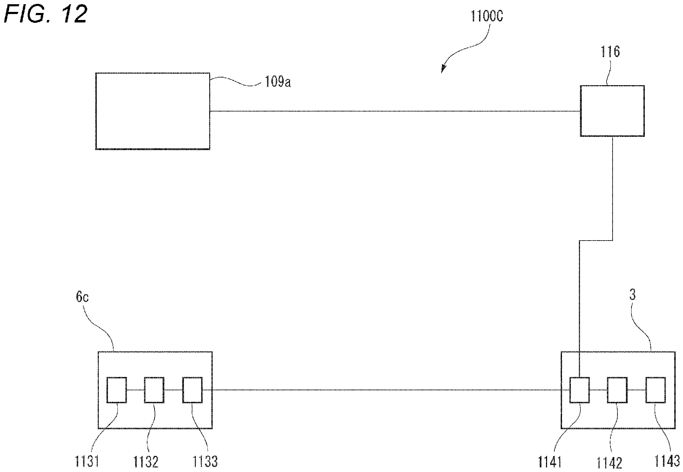

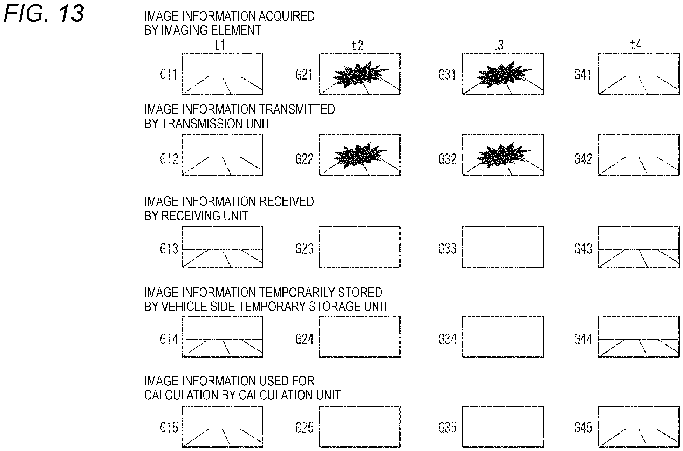

Next, a third modification of the cleaner system 1100 according to the second embodiment will be described using Fig. 12 and Fig. 13. Fig. 12 is a schematic view of a cleaner system 1100C according to the third modification corresponding to Fig. 6. Fig. 13 shows image information delivered by the front camera 6c and the vehicle control unit 3 corresponding to Fig. 7 of the cleaner system 1100C.

As shown in Fig. 12, in the third modification, the cleaner control unit 116 outputs an in-operation signal to the receiving unit 1141 of the vehicle control unit 3 when the front camera cleaner 109a is operating, and the in-operation signal indicates that the front camera cleaner 109a is operating.

In the third modification, the cleaner control unit 116 outputs an in-operation signal to the receiving unit 1141 of the vehicle control unit 3 when the front camera cleaner 109a is operating, and the in-operation signal indicates that the front camera cleaner 109a is operating. When the in-operation signal is input from the cleaner control unit 116, the receiving unit 1141 of the vehicle control unit 3 does not receive image information.

As shown in Fig. 13, the front camera cleaner 109a does not operate at the time t1, the front camera cleaner 109a operates at times t2 and t3, and the front camera cleaner 109a stops operating at a time t4. The cleaner control unit 116 outputs the in-operation signal to the receiving unit 1141 at the times t2 and t3.

Regarding the image information G11 acquired by the imaging unit 1131 at the time t1, the transmission unit 1133 of the front camera 6c transmits the image information G12 to the receiving unit 1141 of the control unit 3, and the receiving unit 1141 of the vehicle control unit 3 receives the image information G13.

Regarding the image information G21 acquired by the imaging unit 1131 at the time t2, the transmission unit 1133 of the front camera 6c transmits the image information G22 to the receiving unit 1141 of the control unit 3, but the receiving unit 1141 of the vehicle control unit 3 does not receive the image. Therefore, the receiving unit 1141 receives blank image information G23.

Regarding the image information G31 acquired by the imaging unit 1131 at the time t3, the transmission unit 1133 of the front camera 6c transmits the image information G32 to the receiving unit 1141 of the control unit 3, but the receiving unit 1141 of the vehicle control unit 3 does not receive the image. Therefore, the receiving unit 1141 receives blank image information G33.

Regarding the image information G41 acquired by the imaging unit 1131 at the time t4, the transmission unit 1133 of the front camera 6c transmits the image information G42 to the receiving unit 1141 of the control unit 3, and the receiving unit 1141 of the vehicle control unit 3 receives the image information G43.

Since the image information acquired by the imaging unit 1131 at the times t2 and t3 is not received by the receiving unit 1141 of, the image information is not input to the calculation unit 1143 of the vehicle control unit 3 at the times t2 and t3.

Even by the cleaner system 1100C according to the third modification, since the image information G21, G31 acquired by the imaging unit 1131 during the operation of the front camera cleaner 109a is not input to the vehicle control unit 3, a situation in which the vehicle control unit 3 controls the vehicle 1 based on information with low reliability is avoided.

### <Fourth Modification>

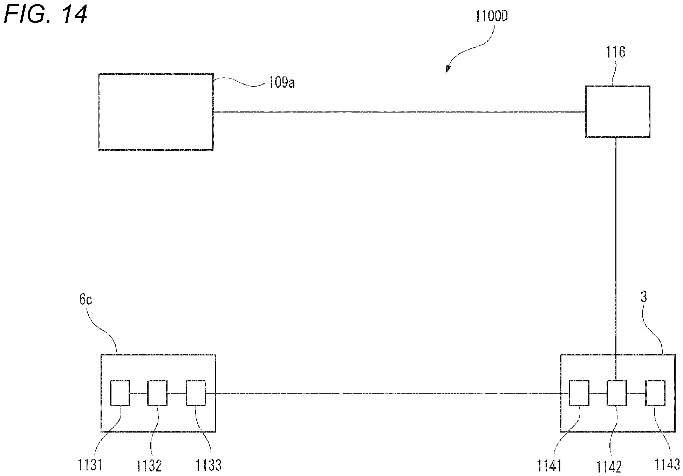

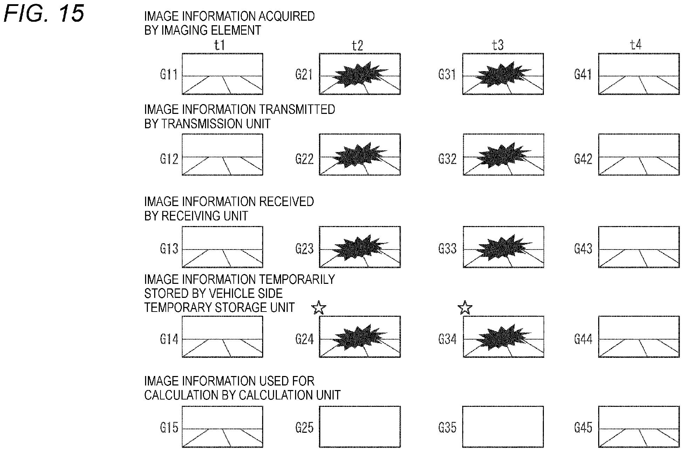

Next, a fourth modification of the cleaner system 1100 according to the second embodiment will be described using Fig. 14 and Fig. 15. Fig. 14 is a schematic view of a cleaner system 1100D according to the fourth modification corresponding to Fig. 6. Fig. 15 shows image information delivered by the front camera 6c and the vehicle control unit 3 corresponding to Fig. 7 of the cleaner system 1100D.

As shown in Fig. 14, in the fourth modification, the cleaner control unit 116 outputs an in-operation signal to the vehicle side temporary storage unit 1142 when the front camera cleaner 109a is operating, and the in-operation signal indicates that the front camera cleaner 109a is operating. When the in-operation signal is input from the cleaner control unit 116, the vehicle side temporary storage unit 1142 stores the image information with a mark.

As shown in Fig. 15, the front camera cleaner 109a does not operate at the time t1, the front camera cleaner 109a operates at times t2 and t3, and the front camera cleaner 109a stops operating at a time t4. The cleaner control unit 116 outputs the in-operation signal to the camera side temporary storage unit 1132 at the times t2 and t3.

Regarding the image information G11 acquired by the imaging unit 1131 at the time t1, the vehicle side temporary storage unit 1142 stores the image information G14.

Regarding the image information G21 acquired by the imaging unit 1131 at the time t2, the vehicle side temporary storage unit 1142 stores the image information G24 with a mark.

Regarding the image information G31 acquired by the imaging unit 1131 at the time t3, the vehicle side temporary storage unit 1142 stores the image information G34 with a mark.

Regarding the image information G41 acquired by the imaging unit 1131 at the time t4, the vehicle side temporary storage unit 1142 stores the image information G44.

The image information acquired by the imaging unit 1131 at the times t2 and t3 is marked and stored in the vehicle side temporary storage unit 1142.

In the fourth modification, the calculation unit 1143 is configured such that the image information to which the mark is attached is not used for calculation. Therefore, as shown in Fig. 15, the cleaning liquid is applied, and the unclear image information G24, G34 is not used as the image information used for calculation by the vehicle control unit 3. In this way, even in the fourth modification, a situation in which the vehicle control unit 3 controls the vehicle 1 based on information with low reliability is avoided.

### <Fifth Modification>

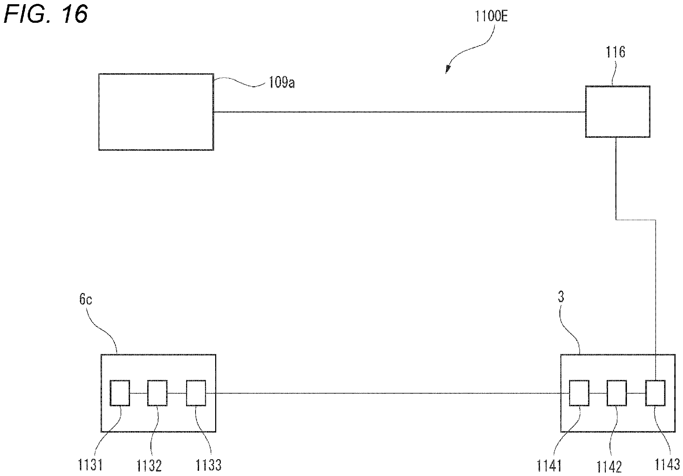

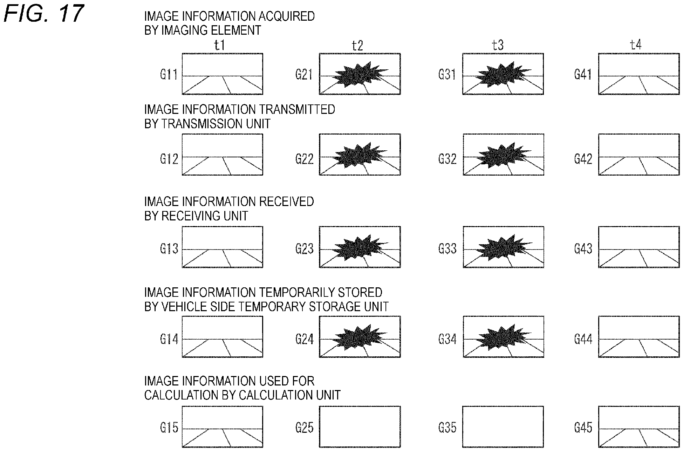

Next, a fifth modification of the cleaner system 1100 according to the second embodiment will be described using Fig. 16 and Fig. 17. Fig. 16 is a schematic view of a cleaner system 1100E according to the fifth modification corresponding to Fig. 6. Fig. 17 shows image information delivered by the front camera 6c and the vehicle control unit 3 corresponding to Fig. 7 of the cleaner system 1100E.

As shown in Fig. 16, in the fifth modification, the cleaner control unit 116 outputs an in-operation signal to the calculation unit 1143 of the vehicle control unit 3 when the front camera cleaner 109a is operating, and the in-operation signal indicates that the front camera cleaner 109a is operating. When the in-operation signal is input from the cleaner control unit 116, the calculation unit 1143 does not use image information.

As shown in Fig. 17, the front camera cleaner 109a does not operate at the time t1, the front camera cleaner 109a operates at times t2 and t3, and the front camera cleaner 109a stops operating at a time t4. The cleaner control unit 116 outputs the in-operation signal to the calculation unit 1143 at the times t2 and t3.

Regarding the image information G11 acquired by the imaging unit 1131 at the time t1, the calculation unit 1143 reads the image information G14 stored in the vehicle side temporary storage unit 1142 as the image information G15, and calculates a signal used for vehicle control by using the image information G15.

Regarding the image information G21 acquired by the imaging unit 1131 at the time t2, the calculation unit 1143 does not read the image information G14 stored in the vehicle side temporary storage unit 1142, and the image information G15 based on the image information G14 is not used for calculation.

Regarding the image information G31 acquired by the imaging unit 1131 at the time t3, the calculation unit 1143 does not read the image information G34 stored in the vehicle side temporary storage unit 1142, and the image information G35 based on the image information G34 is not used for calculation.

Regarding the image information G41 acquired by the imaging unit 1131 at the time t4, the calculation unit 1143 reads the image information G44 stored in the vehicle side temporary storage unit 1142 as the image information G45, and calculates a signal used for vehicle control by using the image information G45.

The image information acquired by the imaging unit 1131 at the times t2 and t3 is not used for calculation by the calculation unit 1143.

In the fifth modification, the calculation unit 1143 is configured not to use the image information for calculation when the in-operation signal is input. Therefore, as shown in Fig. 17, the cleaning liquid is applied, and the unclear image information G24, G34 is not used as the image information used for calculation by the vehicle control unit 3. In this way, even in the fifth modification, a situation in which the vehicle control unit 3 controls the vehicle 1 based on information with low reliability is avoided.

A relationship between the front camera 6c, the front camera cleaner 109a, the cleaner control unit 116, and the vehicle control unit 3 has been described in the second embodiment and the first modification to the fifth modification thereof described above, but the present invention is not limited thereto. The present invention may be applied to a relationship between the back camera 6d, the back camera cleaner 109b, the cleaner control unit 116, and the vehicle control unit 3. The present invention may be applied to a relationship between the front LiDAR 6f, the front LC 103, the cleaner control unit 116, and the vehicle control unit 3. The present invention may be applied to a relationship between the back LiDAR 6b, the back LC 104, the cleaner control unit 116, and the vehicle control unit 3. The present invention may be applied to a relationship between the right LiDAR 6f, the right LC 105, the cleaner control unit 116, and the vehicle control unit 3. The present invention may be applied to a relationship between the left LiDAR 6f, the left LC 106, the cleaner control unit 116, and the vehicle control unit 3.

An aspect in which the front camera 109a outputs an in-operation signal to the camera 6c or the vehicle control unit 3 has been described in the second embodiment and the first modification to the fifth modification thereof described above, but the present invention is not limited thereto. As a matter of course, the front LC 103 may output an in-operation signal to the front LiDAR 6f or the vehicle control unit 3 during operation.

### < <Third Embodiment> >

Next, a vehicle cleaner system according to a third embodiment will be described.

Reference numerals of elements of a vehicle cleaner system 2100 (hereinafter referred to as a cleaner system 2100) according to the second embodiment are obtained by adding 2000 to the reference numerals denoting the elements of the cleaner system 100 according to the third embodiment. The elements of the third embodiment common to those of the first embodiment are denoted by the same reference numeral, and descriptions thereof are omitted as appropriate. Since the vehicle 1 to which the cleaner system 2100 according to the present embodiment is applied is the same as the vehicle 1 of the first embodiment described with Fig. 1 to Fig. 3, a detailed description thereof is omitted.

In the cleaner system 2100 according to the third embodiment of the present invention, the cleaner control unit 116 is configured to output a signal for operating the sensor cleaners 103 to 106 and 109 to the sensor cleaners 103 to 106 and 109 based on traveling information of the vehicle 1.

In a case where the vehicle 1 travels in an automatic driving mode, the vehicle control unit 3 determines a traveling route from a destination, a current location, and map information input from a user. Based on the traveling route, the current location, and the map information, the vehicle control unit 3 grasps that the host vehicle 1 traveling along the traveling route has approached a left turn position. When the host vehicle 1 approaches the left turn position, the vehicle control unit 3 generates a left turn signal.

Before the vehicle 1 turns left, presence or absence of an obstacle in a traveling direction (left front), presence or absence of an obstacle on a left side, and presence or absence of an automobile or a bicycle or a pedestrian approaching from the left back are confirmed. Therefore, when the vehicle control unit 3 generates a left turn signal, the vehicle control unit 3 acquires information in front of the host vehicle 1, information on the left side of the host vehicle 1, and information on the left back of the host vehicle 1.

In a case where an obstacle or the like is not confirmed, the vehicle control unit 3 generates a steering control signal for turning left based on traveling state information, surrounding environment information, current position information, map information, and the like. The steering actuator 12 is configured to receive the steering control signal from the vehicle control unit 3 and control the steering device 13 based on the received steering control signal.

When the vehicle control unit 3 generates a left turn signal, the left turn signal is output to the cleaner control unit 116. When the left turn signal is input, the cleaner control unit 116 outputs a signal for operating the left LC 106 to the left LC 106. The left LiDAR 61 to be cleaned by the left LC 106 can acquire a wide range of information on the left including the left side, the left front, and the left back of the vehicle 1. Therefore, when the left LC 106 is operated when the left turn signal is input, it is possible to acquire clear information from the left LiDAR 61 when the vehicle 1 turns left.

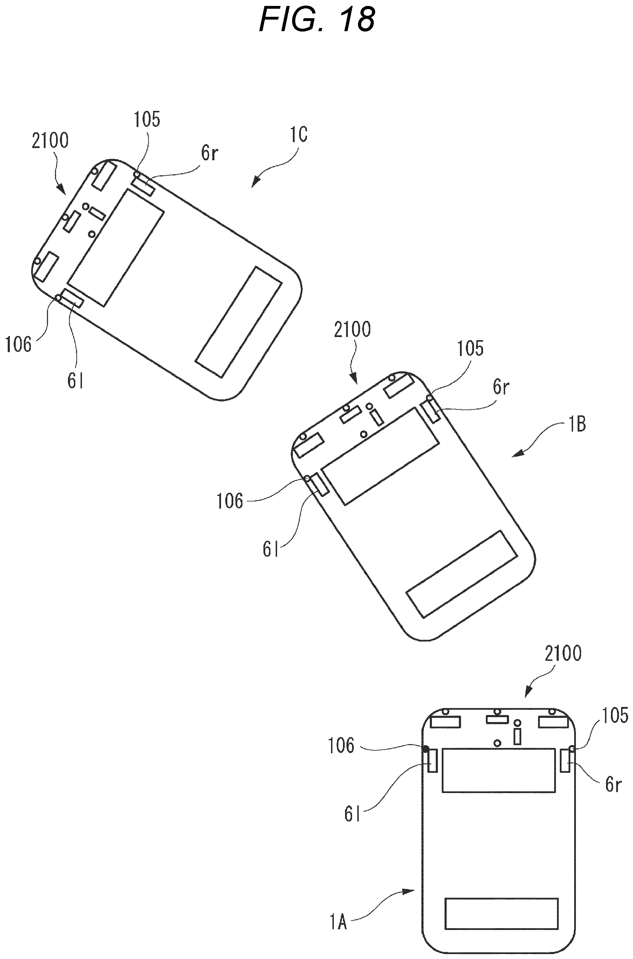

Fig. 18 shows a state in which the vehicle 1 turns left, and a cleaner system 2100 according to the third embodiment of the present invention is mounted on the vehicle 1. In the drawing, 1A shows the vehicle 1 immediately before turning left, and 1B and 1C show the vehicle 1 during the left turn. Fig. 18 shows that the sensor cleaners 103 to 106 and 109 painted out black are in operation.

As shown in Fig. 18, it is preferable to configure the cleaner control unit 116 to output an operation signal to the left LC 106 before the vehicle 1 turns left, and to output a stop signal for stopping the operation of the left LC 106 before the vehicle 1 turns left. More specifically, it is preferable to configure the cleaner control unit 116 to output the operation signal and to output the stop signal to the left LC 106 before the vehicle control unit 3 outputs a steering control signal for turning left to the steering actuator 12. This is because it is difficult to obtain information with high reliability when it is desired to obtain information when the left LiDAR 61 is cleaned with a cleaning liquid.

However, in a case where the left LC 106 is configured to clean the left LiDAR 61 with air, since normal information is obtained during cleaning, cleaning timing may be before or during the left turn.

According to the cleaner control unit 116 according to the present embodiment, since the sensor cleaners 103 to 106 and 109 are operated based on the traveling information of the vehicle 1, it does not take time of the user. Further, since the sensor cleaners 103 to 106 and 109 are operated based on the traveling information, it is possible to keep the sensor in a clean state when necessary, for example, by previously cleaning the sensor required when changing the course.

In the present embodiment, the operation signal may be output to the right LC 105 when the left turn signal is input to the cleaner control unit 116, or the operation signal may not be output to the right LC 105.

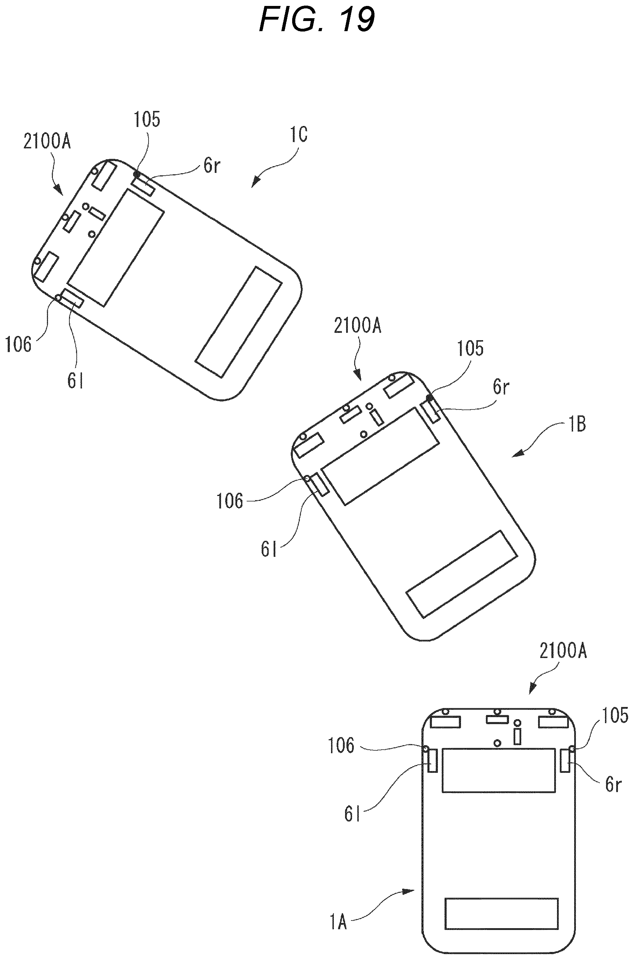

The present invention is not limited to the example of the third embodiment described above. Similarly to Fig. 18, Fig. 19 shows a state in which a vehicle turns left, and a cleaner system 2100A according to a modification of the third embodiment is mounted on the vehicle 1.

As shown in Fig. 19, in the present modification, when the left turn signal is input, the cleaner control unit 116 outputs a signal for operating the right LC 105 to the right LC 105. When turning left, as described above, a wide range of information on the left of the vehicle 1 is acquired, while information on the right of the vehicle 1 becomes less important. Therefore, in the cleaner system 2100A according to the present modification, the right LiDAR 6r which acquires information on the right at the timing when importance of the information on the right of the vehicle 1 is reduced is cleaned.

In particular, the importance of the information on the right of the vehicle 1 is low while the vehicle 1 is turning left. Therefore, the vehicle control unit 3 outputs the steering control signal for turning left to the steering actuator 12, then the cleaner control unit 116 outputs the operation signal to the right LC 105, and the cleaner control unit 116 is preferably configured to stop output of the operation signal or output the stop signal for stopping operation of the left LC 106 when the left turn of the vehicle 1 ends and the steering control signal for going straight is output to the steering actuator 12.

In the present modification, it is preferable to configure the cleaner control unit 116 not to output the operation signal to the left LC 106 when the left turn signal is input to the cleaner control unit 116. This makes it possible to continually obtain information on the left from the left LiDAR 61 at the time of the left turn.

Although an example in which the vehicle 1 turns left at an intersection or the like has been described in the third embodiment and the modification thereof, the third embodiment and the modifications thereof can be applied to a case where the vehicle 1 turns a rudder to the left in order that the vehicle 1 changes a lane.

In the description described above, the time when the vehicle 1 turns left has been described as an example, but the cleaner control unit 116 similarly controls the right LC 105 or the left LC 106 during a right turn.

Further, the cleaner control unit 116 may be configured to operate the front LC 103 and the front camera cleaner 109a and/or stop the operation when the vehicle 1 starts moving forward. Alternatively, the cleaner control unit 116 may be configured to operate the back LC 104 and/or stop the operation when the vehicle 1 starts moving backward.

Although a case has been described in which the vehicle 1 travels in the automatic driving mode in the third embodiment and the modification thereof described above, the present invention is not limited thereto. In a case where an occupant operates a winker switch 18 (see Fig. 2) to input a left turn signal to the vehicle control unit 3, the cleaner control unit 116 may be configured to execute control as in the third embodiment or the modification thereof described above. Alternatively, in a case where an occupant operates the winker switch 18 to input a left turn signal to the cleaner control unit 116, the cleaner control unit 116 may be configured to execute control as in the third embodiment or the modification thereof described above.

Although a configuration has been described in which the cleaner control unit 116 receives the steering control signal as traveling information in the third embodiment and the modification thereof described above, the present invention is not limited thereto. For example, the cleaner control unit 116 may be configured to receive at least one of a output signal, navigation information, and automatic driving information from the winker switch 18 as the traveling information.

### < <Fourth Embodiment> >

Next, a vehicle cleaner system according to a fourth embodiment will be described.

Reference numerals of elements of a vehicle cleaner system 3100 (hereinafter referred to as a cleaner system 3100) according to the second embodiment are obtained by adding 3000 to the reference numerals denoting the elements of the cleaner system 100 according to the fourth embodiment. The elements of the third embodiment common to those of the fourth embodiment are denoted by the same reference numeral, and descriptions thereof are omitted as appropriate.

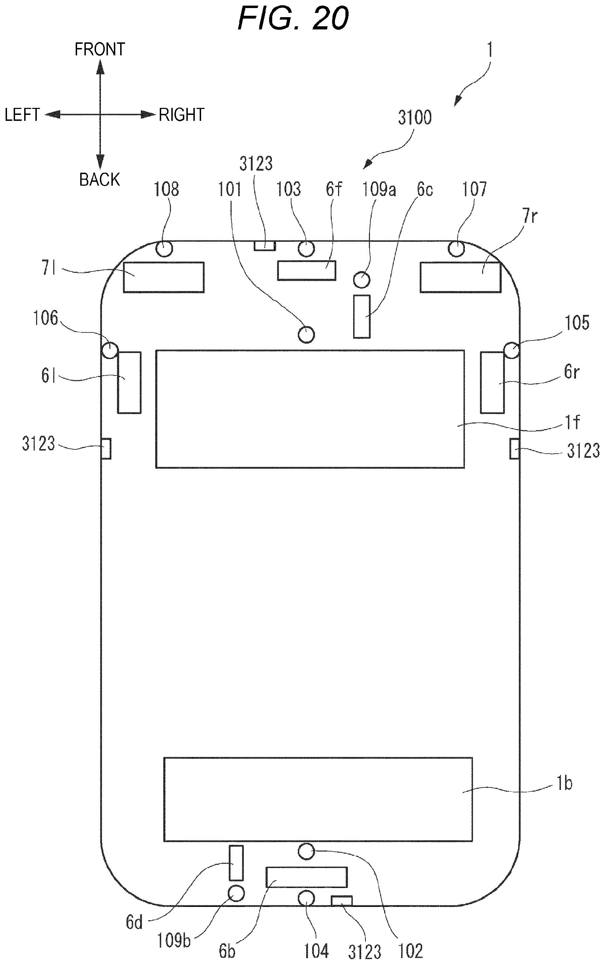

Fig. 20 is a top view of the vehicle 1 on which the cleaner system 3100 is mounted. As shown in Fig. 20, in the present embodiment, a human sensor 3123 is mounted on the vehicle 1. A basic configuration of the cleaner system 3100 is the same as that shown in Fig. 2 and Fig. 3 described above.

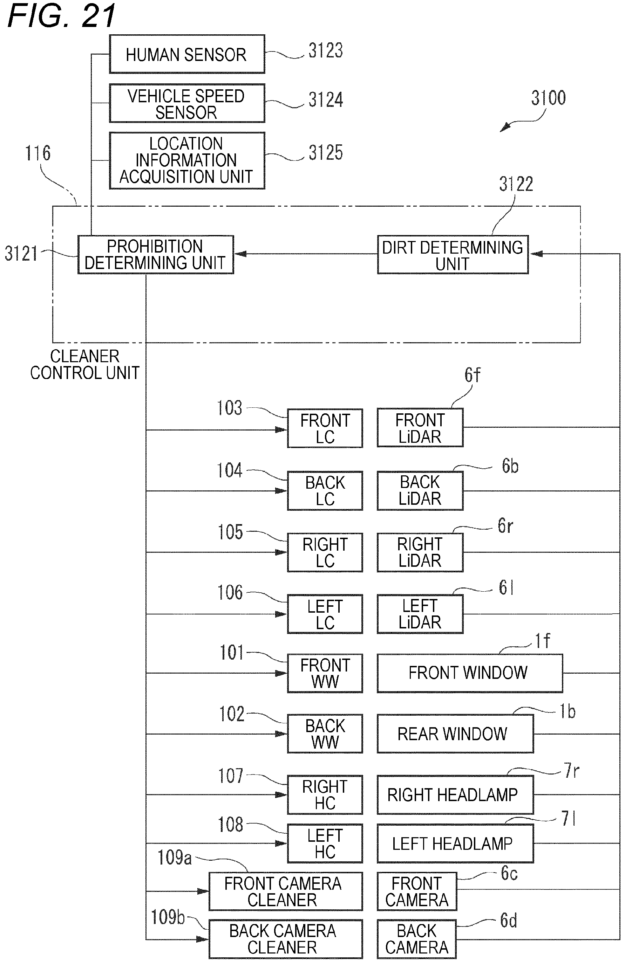

Fig. 21 is a more detailed block diagram of the cleaner system 3100. As shown in Fig. 21, the cleaner control unit 116 includes a prohibition determining unit 3121 and a dirt determining unit 3122. A human sensor 3123, a vehicle speed sensor 3124, and a location information acquisition unit 3125 are connected to the prohibition determining unit 3121.

The dirt determining unit 3122 determines a degree of dirt of the cleaning objects 1f, 1b, 6f, 6b, 6r, 61, 7r, 71, and 9c, and outputs an operation request signal for requesting operation of the corresponding cleaners 101 to 109b to the prohibition determining unit 3121 when the cleaning objects are determined to be dirty.

For example, when the dirt determining unit 3122 determines that the front LiDAR 6f is dirty based on the signal output from the front LiDAR 6f, an operation request signal for requesting operation of the front LC 103 is output to the prohibition determining unit 3121. Alternatively, when a dirt signal is input from a dirt sensor capable of detecting dirt of the front LiDAR 6f, the dirt determining unit 3122 outputs the operation request signal for requesting operation of the front LC 103 to the prohibition determining unit 3121.

The prohibition determining unit 3121 does not operate the cleaners 101 to 109b in a case of satisfying predetermined conditions or in a case to be described below. When the operation request signal is input from the dirt determining unit 3122, the prohibition determining unit 3121 determines whether or not to operate the corresponding cleaners 101 to 109b based on at least one signal of the human sensor 3123, the vehicle speed sensor 3124, and the location information acquisition unit 3125. In a case where the corresponding cleaners 101 to 109b are operated, the prohibition determining unit 3121 outputs an operation signal for operating the cleaners 101 to 109b. In a case where the corresponding cleaners 101 to 109b are not operated, the prohibition determining unit 3121 does not output an operation signal to the cleaners 101 to 109b.

As shown in Fig. 20, the human sensor 3123 is provided at four positions of a front portion, a right portion, a back portion, and a left portion of the vehicle 1. For example, in a case where a person enters one meter around the human sensor 3123, the human sensor 3123 outputs a manned signal indicating that there is a person. In a state in which the manned signal is input from the human sensor 3123, the prohibition determining unit 3121 does not output the operation signal to the corresponding cleaners 101 to 109b even though the operation request signal is input from the dirt determining unit 3122. In a state in which the manned signal is not input from the human sensor 3123, the prohibition determining unit 3121 outputs the operation signal to the corresponding cleaners 101 to 109b in the case where the operation request signal is input from the dirt determining unit 3122.

In the cleaner system 3100 according to the present embodiment, the operation of the cleaners 101 to 109b is prohibited when a signal indicating that there is a person around the vehicle 1 is input from the human sensor 3123 to the cleaner control unit 116. Therefore, in the case where there is a person around the vehicle 1, it is possible to prevent a situation in which the cleaning liquid is applied to the person against the intention of the occupant.

A threshold value where the human sensor 3123 outputs the manned signal is preferably within 1 meter, but may be within 2 meters or equal to or less than 50 centimeters. The threshold value may be configured to be changeable by a user. The larger the threshold value is, the easier the cleaning liquid is applied to the person, but cleaning frequency of the cleaning object is easy to decrease. The smaller the threshold value is, the larger the cleaning frequency of the cleaning object can be, but probability that the cleaning liquid is applied to the person increases. The threshold value may be configured to be changeable by the user. For example, the threshold value may be configured to be changeable by the user to three modes of a short distance mode of 50 centimeters, a medium distance mode of 1 meter, and a long distance mode of 2 meters.

The threshold value where the manned signal is output may be different for each human sensor 3123. For example, in a case where an appearance of the front WW 101 is configured to integrate with an upper surface of a bonnet, the cleaning liquid of the front WW 101 is easy to be sprayed at a large angle with respect to the front window 1f. Compared with this, in a case where an appearance of the right LC 105 is configured to integrate with a right side surface of the vehicle 1, the cleaning liquid of the right LC 105 is easy to be sprayed at a small angle with respect to the right LiDAR 6r. In this case, a scattering range of the cleaning liquid of the right LC 105 tends to be smaller than a scattering range of the cleaning liquid of the front WW 101. Therefore, the threshold value where the manned signal of the human sensor 3123 provided on the right portion of the vehicle 1 is output may be set smaller than the threshold value where the manned signal of the human sensor 3123 provided on the front portion of the vehicle 1 is output.

Alternatively, the human sensor 3123 is configured to be able to detect a distance from the detected person, and the human sensor 3123 may be configured to output a signal indicating the distance to the prohibition determining unit 3121. As shown in Fig. 20, the front camera 6c and the front window 1f are positioned behind the front LiDAR 6f. Therefore, in the case where there is a person in front of the vehicle 1, the cleaning liquid scattering during cleaning of the front LC 103 is easy to be applied to the person compared with cleaning of the front WW 101 or the front camera 6c. Therefore, for example, a distance from the person which prohibits the operation of the front LC 103 may be set larger than a distance from the person which prohibits the operation of the front camera cleaner 109a or the front WW 101. The human sensor 3123 may be configured to output the signal indicating the distance from the person instead of the manned signal, or may be configured to output the signal together with the manned signal.

The vehicle speed sensor 3124 detects a vehicle speed of the vehicle 1 and outputs a specific vehicle speed signal to the prohibition determining unit 3121 in a case where the vehicle speed is equal to or lower than a predetermined vehicle speed. In a state in which the specific vehicle speed signal is input from the vehicle speed sensor 3124, the prohibition determining unit 3121 does not output the operation signal to the corresponding cleaners 101 to 109b even though the operation request signal is input from the dirt determining unit 3122. In a state in which the specific vehicle speed signal is input from the vehicle speed sensor 3124, and in the case where the operation request signal is input from the dirt determining unit 3122, the prohibition determining unit 3121 outputs the operation signal to the corresponding cleaners 101 to 109b.

A state in which the vehicle speed is low considers a state in which the vehicle 1 is traveling prudentially in a case where the person is nearby, a state in which the vehicle 1 is traveling on a narrow alley, a state in which the vehicle 1 is traveling in a parking lot, a state in which the vehicle 1 is to stop in front of a crosswalk, a state in which the vehicle 1 departs after stopping in front of the crosswalk, and the like. That is, it is highly possible that a person is present around in the state in which the vehicle speed is low compared with a state in which the vehicle speed is high.

Thus, the cleaner system 3100 according to the present embodiment prohibits the operation of the cleaners 101 to 109b when a vehicle speed equal to or lower than a threshold value is detected from the vehicle speed sensor 3124. Therefore, in the case where it is highly possible that there is a person around the vehicle 1, it is possible to prevent a situation in which the cleaners 101 to 109b operate against the intention of the occupant.

The threshold value when the specific vehicle speed signal is output may be configured to be changeable by the user. For example, the threshold value may be configured to be changeable by the user to three modes of a low speed mode of 5 km/h, a medium speed mode of 10 km/h, and a high speed mode of 20 km/h.

An acceleration sensor may be used instead of the vehicle speed sensor 3124. The prohibition determining unit 3121 may perform the determination based on the vehicle speed obtained by time-integrating acceleration of the acceleration sensor. Alternatively, the prohibition determining unit 3121 may be configured to determine whether to prohibit the operation of the cleaners 101 to 109b based on both output of the vehicle speed sensor 3124 and output of the acceleration sensor.

Based on the GPS 9 and the map information storage unit 11 (see Fig. 2), the location information acquisition unit 3125 determines what kind of places the vehicle 1 is in such as a building, an urban area, a service area, a suburb, and a highway. In the building, the urban area, the service area, and the like, it is highly possible that there is a person around the host vehicle 1. On the other hand, in the suburb, the highway, or the like, it is highly possible that there is a person around the host vehicle 1. When it is determined that the vehicle 1 is in the building, the urban area, or the service area, the location information acquisition unit 3125 outputs a manned area signal to the prohibition determining unit 3121. When it is determined that the vehicle 1 is in the suburb or the highway, the location information acquisition unit 3125 does not output the manned area signal to the prohibition determining unit 3121.

In a state where the manned area signal is input from the location information acquisition unit 3125, the prohibition determining unit 3121 does not output the operation signal to the corresponding cleaners 101 to 109b even though the operation request signal is input from the dirt determining unit 3122. In a state where the manned area signal is not input from the location information acquisition unit 3125, and in the case where the operation request signal is input from the dirt determining unit 3122, the prohibition determining unit 3121 outputs the operation signal to the corresponding cleaners 101 to 109b.

The cleaner system 3100 according to the present embodiment prohibits the operation of the cleaners 101 to 109b when it is determined that the host vehicle 1 is in an area where it is highly possible that there is a person from the location information acquisition unit 3125 which acquires a geographical position of the host vehicle 1. Therefore, in the case where it is highly possible that there is a person around the vehicle 1, it is possible to prevent a situation in which the cleaners 101 to 109b operate against the intention of the occupant.

In the above description, the prohibition determining unit 3121 has shown a configuration in which the manned signal is input from the human sensor 3123, the specific vehicle speed signal is input from the vehicle speed sensor 3124, and the manned area signal is input from the location information acquisition unit 3125, but the present invention is not limited thereto. The prohibition determining unit 3121 may be configured such that only one or only two of the manned signal, the specific vehicle speed signal, and the manned area signal are input.

### <Modification>

In the fourth embodiment described above, an example in which the dirt signal output from the dirt determining unit 122 is a trigger which determines whether the prohibition determining unit 3121 prohibits the operation of the corresponding cleaners 101 to 109b has been described, but the present invention is not limited thereto.

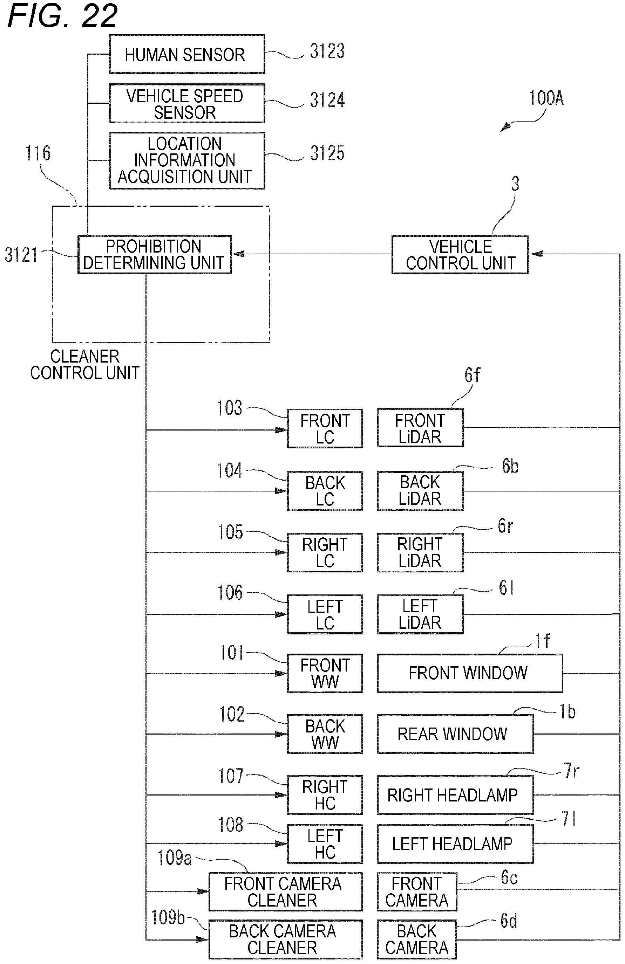

Fig. 22 is a block diagram of a cleaner system 3100A according to a modification of the cleaner system 3100. As shown in Fig. 22, the signal output from the vehicle control unit 3 may be configured to be a trigger which determines whether the prohibition determining unit 3121 prohibits the operation of the corresponding cleaners 101 to 109b.

For example, when the vehicle control unit 3 determines that a predetermined interval has elapsed since last operation date and time of the corresponding cleaners 101 to 109b, the vehicle control unit 3 may be configured to output an operation request signal for requesting the operation of the corresponding cleaners 101 to 109b to the prohibition determining unit 3121. Alternatively, when the vehicle control unit 3 determines that the vehicle 1 has traveled a predetermined distance since last operation date and time of the corresponding cleaners 101 to 109b, the vehicle control unit 3 may be configured to output an operation request signal for requesting the operation of the corresponding cleaners 101 to 109b to the prohibition determining unit 3121.

The predetermined interval or the predetermined distance may be different depending on the cleaning objects. For example, a predetermined interval or a predetermined distance set for the front LC 103 or the front camera cleaner 109a may be set shorter than a predetermined interval or a predetermined distance set for the headlamp cleaners 107 and 108. This makes it easier for the front LC 103 and the front camera cleaner 109a to operate more frequently than the headlamp cleaners 107 and 108.

### <Various modifications>

Although the embodiments of the present invention have been described above, it goes without saying that the technical scope of the present invention should not be interpreted as being limited by description of the present embodiments. It is to be understood by those skilled in the art that the present embodiments are merely examples and that various embodiments can be modified within the scope of the invention described in the claims. The technical scope of the present invention should be determined based on the scope of the invention described in the claims and an equivalent scope thereof.

In the present embodiments, the driving mode of the vehicle has been described as including the fully automatic driving mode, the advanced driving support mode, the driving support mode, and the manual driving mode, but the driving mode of the vehicle should not be limited to these four modes. The driving mode of the vehicle may include at least one of these four modes. For example, only any one of the driving modes of the vehicle may be executable.

Further, classification and a display form of the driving mode of the vehicle may be appropriately changed in accordance with regulations or rules related to automatic driving in each country. Similarly, definition of each of the "complete automatic driving mode", the "advanced driving support mode", and the "driving support mode" described in the description of the present embodiment is absolutely an example, and these definitions may be appropriately changed in accordance with regulations or rules related to automatic driving in each country.

Although the above embodiments describe examples in which the cleaner system 100, 1100 to 1100E, 2100, 2100A, 3100, 3100A is mounted on a vehicle capable of automatic driving, the cleaner system 100, 1100 to 1100E, 2100, 2100A, 3100, 3100A may be mounted on a vehicle incapable of automatic driving.

In the embodiment described above, although the cleaner systems 100, 1100 to 1100E, 2100, 2100A, 3100, and 3100A have been described as a configuration including the external sensor 6, the cleaner systems 100, 1100 to 1100E, 2100, 2100A, 3100, and 3100A may be configured not to include the external sensor 6. However, when the cleaner systems 100, 1100 to 1100E, 2100, 2100A, 3100, and 3100A are configured as assemblies including the external sensor 6, it is preferable that positioning accuracy of the cleaners 103 to 106, 109a, and 109b with respect to the external sensor 6 is easily increased. Further, when the cleaner systems 100, 1100 to 1100E, 2100, 2100A, 3100, and 3100A are mounted on the vehicle 1, since the external sensor 6 can also be incorporated together, assembly properties to the vehicle 1 are also improved.

In the embodiments described above, the cleaners 103 to 106 which clean the LiDARs 6f, 6b, 6r, and 61, the cleaner 109a which cleans the front camera 6c, and the cleaner 109b which cleans the back camera 6d have been described as the cleaner which cleans the external sensor 6, but the present invention is not limited thereto. The cleaner systems 100, 1100 to 1100E, 2100, 2100A, 3100, and 3100A may have cleaners and the like which clean radar instead of the sensor cleaners 103 to 106, 109a, and 109b, or may have cleaners and the like which clean radar together with the sensor cleaners 103 to 106, 109a, and 109b. The LiDAR and the radar may be cleaned at the same time, or only either one of the LiDAR and the radar may be operated at the same time.

The external sensor 6 such as the LiDARs 6f, 6b, 6r, and 61 may include a detection surface and a cover which covers the detection surface. The cleaner which cleans the external sensor 6 may be configured to clean the detection surface or may be configured to clean the cover which covers the sensor.

The cleaning liquid discharged by the cleaner systems 100, 1100 to 1100E, 2100, 2100A, 3100, and 3100A includes water or a detergent. The cleaning medium discharged to each of the front and rear windows 1f and 1b, the headlamps 7r and 71, the LiDARs 6f, 6b, 6r, and 61, and the camera 6c and 6d may be different or may be the same.

Although the above embodiment describes an example in which the cleaners 101, 103, 105 to 109a are connected to the front tank 111 and the cleaners 102, 104, 109b are connected to the back tank 113, the present invention is not limited thereto.

The cleaners 101 to 109b may be connected to a single tank. The cleaners 101 to 109b may be connected to tanks different from each other.

Alternatively, the cleaners 101 to 109b may be connected to a common tank for each type of the cleaning objects thereof. For example, the LCs 103 to 106 may be connected to a common first tank, and the HCs 107 and 108 may be connected to a second tank different from the first tank.

Alternatively, the cleaners 101 to 109b may be connected to a common tank for each disposing position of the cleaning objects. For example, the front WW 101, the front LC 103, and the front camera cleaner 109a may be connected to a common front tank, the right LC 105 and the right HC 107 may be connected to a common right tank, the back WW 102, the back LC 104, and the back camera cleaner 109b may be connected to a common back tank, and the left LC 106 and the left HC 108 may be connected to a common left tank.

Although an example in which the cleaning medium is discharged from the cleaners 101 to 109b by operating the actuators provided in the cleaners 101 to 109b has been described in the embodiments described above, the present invention is not limited thereto.

A normally closed valve is provided in each of the cleaners 101 to 109b, a pump is operated such that a pressure between the tanks and the cleaners 101 to 109b is always high, and the control unit 116 opens the valves provided in the cleaners 101 to 109b, so that the cleaning media may be discharged from the cleaners 101 to 109b.

Alternatively, each of the cleaners 101 to 109b is connected to each of the pumps, and each of the pumps is individually controlled by the cleaner control unit 116, so that the discharge of the cleaning media from the cleaners 101 to 109b may be controlled. In this case, the cleaners 101 to 109b may be connected to different tanks respectively or may be connected to a common tank.

The cleaners 101 to 109b are provided with one or more discharge holes where the cleaning medium is discharged. The cleaners 101 to 109b may be provided with one or more discharge holes where the cleaning liquid is discharged and one or more discharge holes where air is discharged.

Each of the cleaners 101 to 109b may be provided individually, or a plurality of cleaners may be configured as a unit. For example, the right LC 105 and the right HC 107 may be configured as a single unit. Regarding the aspect in which the right headlamp 7r and the right LiDAR 6r are integrated, the right LC 105 and the right HC 107 are preferably configured as a single unit.

The present application is based on Japanese Patent Application No. 2017-142714 filed on July 24, 2017, Japanese Patent Application No. 2017-142715 filed on July 24, 2017, Japanese Patent Application No. 2017-142716 filed on July 24, 2017, and Japanese Patent Application No. 2017-142717 filed on July 24, 2017, the contents of which are incorporated herein by reference.

## Claims

1. A vehicle cleaner system comprising:
a sensor which is mounted on a vehicle, is configured to acquire information around the vehicle, and is configured to output a sensor signal;
a cleaner capable of discharging a cleaning liquid to the sensors;
a vehicle control unit configured to recognize information around a host vehicle or control the host vehicle by using the sensor signal output from the sensor; and
a cleaner control unit configured to output to at least one of the sensor and the vehicle control unit an in-operation signal indicating that the cleaner is in operation when the cleaner is in operation.

2. The vehicle cleaner system according to claim 1, wherein
when the in-operation signal is input in the sensor, the sensor is configured to execute any one of:
not transmitting the sensor signal to the vehicle control unit,
transmitting the sensor signal with a mark to the vehicle control unit, and
not storing the sensor signal in a temporary storage unit provided in the sensor.

3. The vehicle cleaner system according to claim 1, wherein
when the in-operation signal is input in the vehicle control unit, the vehicle control unit is configured to execute any one of:
not receiving the sensor signal,
marking and storing the sensor signal in a temporary storage unit provided in the vehicle control unit, and
not using the sensor signal for recognizing surrounding information or controlling the vehicle.
